Europäisches Patentamt

European Patent Office

Office européen des brevets

(19)

(11) Veröffentlichungsnummer: **0 011 872**
**B1**

(12) # EUROPÄISCHE PATENTSCHRIFT

(45) Veröffentlichungstag der Patentschrift:
27.04.83

(21) Anmeldenummer: 79104794.7

(22) Anmeldetag: 30.11.79

(51) Int. Cl.³: **B 01 D 53/04,** B 01 J 19/04,
C 01 B 3/56, C 01 B 23/00,
C 07 C 7/12

(54) **Verfahren zum Betrieb einer zyklisch arbeitenden Druckwechsel-Adsorptionsanlage.**

(30) Priorität: 30.11.78 DE 2851847

(43) Veröffentlichungstag der Anmeldung:
11.06.80 Patentblatt 80/12

(45) Bekanntmachung des Hinweises auf die Patenterteilung:
27.04.83 Patentblatt 83/17

(84) Benannte Vertragsstaaten:
BE CH DE FR GB IT NL

(56) Entgegenhaltungen:
EP-A-0 006 138
DE-A-1 919 557
DE-A-2 624 346

(73) Patentinhaber: Linde Aktiengesellschaft,
Abraham-Lincoln-Strasse 21, D-6200 Wiesbaden (DE)
Patentinhaber: BAYER ANTWERPEN N.V., Kanaaldok
B 1 Kruisschans, B-2040 Antwerpen 4 (BE)

(72) Erfinder: Benkmann, Christian, Zündterstrasse 27,
D-8000 München 21 (DE)
Erfinder: Leitgeb, Paul, Dr., Schlegelstrasse 7,
D-8000 München 70 (DE)
Erfinder: Asztalos, Stefan, Noestrasse 20,
D-8000 München 71 (DE)

(74) Vertreter: Schaefer, Gerhard, Dr., Linde
Aktiengesellschaft Zentrale Patentabteilung,
D-8023 Höllriegelskreuth (DE)

ACTORUM AG

## Verfahren zum Betrieb einer zyklisch arbeitenden Druckwechsel-Adsorptionsanlage

Die Erfindung betrifft ein Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft, bei dem für die Adsorber und/oder die Ventile der Druckwechsel-Adsorptionsanlage als messbare physikalische Grösse der Druck in Adsorbern oder Leitungen ausgewählt und laufend messend verfolgt wird und beim Auftreten von Differenzen zwischen Soll- und Ist-Werten der Drücke die dadurch als defekt ermittelten Apparateteile abgeblockt werden.

Zur Reinigung und Zerlegung von Gasen, beispielsweise zur Reinigung von Erdgas oder zur Zerlegung von Edelgasen, Luft, Stadtgasen, Spaltgasen, wasserstoffreichen Gasgemischen oder gasförmigen Kohlenwasserstoffen werden heutzutage wegen ihrer Wirtschaftlichkeit und wegen ihrer Effektivität häufig Adsorptionsverfahren eingesetzt. Ganz besonders bewährt haben sich in der letzten Zeit Verfahren, die quasi-isotherm ablaufen und als Druckwechsel-Adsorptionsverfahren bekannt sind. Bei ihnen wird die Desorption bzw. Regenerierung des beladenen Adsorbers nicht durch eine Temperaturerhöhung bewerkstelligt, die eine nachfolgende Abkühlung auf die Adsorption erforderlich machen würde, sondern lediglich durch Drucksenkung über dem beladenen Adsorbens, wobei die Desorption in ihren letzten Stadien häufig durch Anwendung eines Spülgases komplettiert wird. Es ist ausserdem Stand der Technik, die bei der Druckentlastung eines beladenen Adsorbers freiwerdenden Gase mehr oder weniger vollständig zur Druckerhöhung in anderen Adsorbern, die sich auf einem niedrigeren Druckniveau befinden, einzusetzen.

So ist beispielsweise aus der DE-OS 2 624 346 bekannt, zur Reinigung bzw. Zerlegung einiger der eingangs genannten Gasgemische Druckwechsel-Adsorptionsanlagen einzusetzen, die mit zu neun Adsorbern bestückt sind. Jedem der Adsorber sind bei der bekannten Anlage sechs Ventile zugeordnet. An die bei höherem Druck vorgenommene Adsorption schliessen sich beim bekannten Verfahren mehrere Entspannungsschritte an, durch die zunächst das in den Hohlräumen des Adsorptionsmittels befindliche Gas, später aber auch adsorbierte Komponenten freigesetzt werden. Die ersten Entspannungsschritte werden durch Druckausgleich mit anderen, auf niedrigeren Drücken befindlichen Adsorbern durchgeführt, die auf diese Weise wieder auf einen gewissen Druck gebracht werden. Nur das bei der letzten Entspannungsstufe anfallende Gas wird als Restgas abgezogen, woran sich eine Gegenstromspülung anschliesst, um möglichst alle adsorbierten Komponenten aus dem Adsorbens zu entfernen. In einer Anzahl von Druckaufbauschritten, zum grossen Teil durch Druckausgleich mit anderen, auf höheren Drücken befindlichen Adsorbern, wird der Druck dann im desorbierten Adsorber wieder erhöht, wobei die letzte Druckerhöhung auf Adsorptionsdruck mit Produktgas erfolgt.

Bei derartigen Anlagen beträgt die Dauer der einzelnen Takte innerhalb eines Zyklus, bis der Adsorber wieder in seinen Ausgangszustand zurückgekehrt ist, oft nur einige Minuten. Mitunter liegen die Taktzeiten sogar nur in der Grössenordnung von Sekunden.

Es liegt auf der Hand, dass ein so schneller Wechsel der Drücke und der Gasflüsse hohe Anforderungen an die Belastbarkeit der Adsorber, der Leitungen und der Ventile stellt, insbesondere wenn man berücksichtigt, dass bei derartigen Anlagen mit einer Lebensdauer von zehn Jahren gerechnet wird. Obwohl diesen Tatsachen bei der Auslegung solcher Anlagen Rechnung getragen wird, kommt es doch mitunter zu Schäden, die auf Materialermüdung oder Materialfehler zurückzuführen sind, Schäden, die sowohl die Adsorber als auch die Leitungen oder die Ventile befallen können, die sich in der Regel als Druckverluste in den Adsorbern und im Leitungssystem äussern und die es notwendig machen, die Anlage stillzulegen, sämtliche Apparateteile zu testen, die defekten zu ermitteln, zu reparieren oder gegen neue auszutauschen und die Anlage dann wieder in Betrieb zu setzen. Derartige Stillstandszeiten bringen ausserordentliche wirtschaftliche Nachteile mit sich, insbesondere wenn die in dem Adsorptionsverfahren gewonnenen Fraktionen in stetiger Menge an andere, ebenfalls kontinuierlich arbeitende Anlagen zur Weiterverarbeitung abgegeben werden müssen.

Um diesen Nachteilen abzuhelfen, wird bei einem zum Stand der Technik gehörenden Verfahren (EP-A-0 006 138) eine messbare physikalische Grösse, beispielsweise der in Adsorbern oder Leitungen herrschende Druck, ausgewählt. Diese Messgrösse wird durch fortlaufende Messungen verfolgt. Das Auftreten von Differenzen zwischen den Soll- und den Ist-Werten dieser Messgrössen signalisiert Störungen in bestimmten Apparateteilen, deren Ursachen dann in einer anschliessenden Fehlersuche ermittelt werden.

Darüber hinaus ist dieses Verfahren des Standes der Technik jedoch noch mit dem Nachteil behaftet, dass es hinsichtlich der Umschaltung der Anlage auf ein neues Verfahrensschema noch zu wünschen übrig lässt.

Es ist deshalb die Aufgabe der vorliegenden Erfindung, ein Verfahren zu schaffen, das es ermöglicht, Fehler nicht nur schnell zu erkennen, sondern auch eine Druckwechsel-Adsorptionsanlage dann unter Ausschaltung der als fehlerhaft erkannten Teile mit einer verminderten Anzahl von Apparateteilen weiterzufahren, so dass insgesamt ein vollständig kontinuierlicher Betrieb gewährleistet ist.

Diese Aufgabe wird erfindungsgemäss dadurch gelöst, dass die Drücke während jedes Taktes festgestellt, Abweichungen von den Soll-Werten jedoch nur bei ihrem ersten Auftreten registriert werden und die nach dem Abblocken verbleibenden Adsorber teilweise bis zu vorher festgelegten Takten weiterlaufen und teilweise in ihrem Zustand verharren, bis alle verbliebenen Adsorber einer ihrer Anzahl entsprechenden Taktfolge angepasst sind.

Die in derartigen Anlagen am häufigsten auftretenden Fehler beruhen auf Undichtheiten im Ventilsitz. Sie äussern sich in Druckabweichungen in Adsorbern oder Leitungen, die noch mit anderen Leitungen, Ventilen und Adsorbern in Verbindung stehen. Solche Undichtheiten eines Ventils, die naturgemäss zu Drücken vor und hinter dem Ventil führen, die vom Solldruck abweichen, können schnell erkannt werden, wenn man die Druckzustände, die sich vor und hinter dem Ventil in allen Apparateteilen, die mit der Leitung, in der das Ventil sich befindet, in einem bestimmten Schalttakt in Verbindung stehen, mit den zugehörigen Soll-Druckzuständen vergleicht und dann aus einer zunächst grösseren Zahl verdächtiger Ventile durch fortlaufenden Vergleich der Druckzustände in anderen Takten und an anderen Adsorbern, wobei sich ebenfalls verdächtige Ventile ergeben, durch logische Schlussfolgerungen schliesslich dasjenige ermittelt, welches als einziges für eine grössere Anzahl von Druckabweichungen verantwortlich sein kann.

Auf welche Art der Druck gemessen wird, oder ob ein absoluter Druck oder eine Druckänderung oder ein Druckverlauf hierfür zweckmässig gemessen wird, hängt davon ab, welche Art Druckwechselverfahren durchgeführt wird, welche technischen Hilfs- und Überwachungsmittel zur Verfügung stehen, welche Druckdifferenzen zwischen Adsorption und Desorption herrschen usw.

Es ist z.B. möglich, eine vorbestimmte Druckänderung durch eine automatische Regelung der Ventile innerhalb einer bestimmten Zeit zu bewerkstelligen. Dann kann beispielsweise die Ventilstellung zu einem bestimmten Zeitpunkt während der Druckänderung als physikalische Grösse, die es zu überwachen gilt, gewählt werden.

Man kann Druckwechsel-Adsorptionsanlagen so fahren, dass die einzelnen Schalttakte, d.h. die Ventilumstellungen, nicht nach einem Zeitplan, sondern nach einem Druckplan erfolgen, d.h. die Ventile schalten um, wenn der Druck in bestimmten Teilen der Anlage, beispielsweise in den Adsorbern oder in den Verbindungsleitungen, einen bestimmten, vorher festgelegten Wert erreicht hat. Bei einer vorgegebenen Ventilkennlinie besteht dann die Möglichkeit, die Zeit, die bis zum Umschalten verfliesst, zu messen und Abweichungen von den Sollzeiten als Indizien für defekte Ventile heranzuziehen.

Die am weitesten verbreitete Art, Druckwechsel-Adsorptionsanlagen zu fahren, besteht jedoch darin, die Umschaltungen einem vorher genau festgelegten Zeitplan folgen zu lassen. In diesem Fall hat es sich erfindungsgemäss als besonders zweckmässig erwiesen, die Drücke in den Adsorbern und/oder in den verbindenden Leitungen als physikalische Grössen auszuwählen und zur Ermittlung defekter Ventile heranzuziehen.

Im Prinzip kann ein undichtes Ventil entweder zu einem höheren oder zu einem niedrigeren Druck als dem Soll-Druck führen. Übersteigt der Ist-Druck den Soll-Druck, dann kommen als Ventile all jene in Frage, die zwischen der Messstelle bzw. dem Adsorber, in dem sich die Messstelle befindet und anderen Apparateteilen liegen, die einen höheren Druck haben. Wenn anderseits die Abweichung vom Soll-Wert nach unten erfolgt, dann sind alle diejenigen Ventile verdächtig, die zwischen der Messstelle und den Apparateteilen liegen, die sich auf einem niedrigeren Druck befinden. Durch eine Weiterverfolgung der Drücke in den folgenden Takten in demselben Adsorber und auch in anderen Adsorbern können dann durch einen Vergleich der Ist- und der Soll-Werte jeweils bestimmte, vorher verdächtige Ventile ausgeschlossen werden, so dass zum Schluss ein einziges, nämlich das defekte Ventil ermittelt werden kann.

Ein wesentliches Merkmal der Erfindung ist dabei, dass die Drücke zwar während jedes Taktes festgestellt, Abweichungen von den Soll-Werten jedoch nur bei ihrem ersten Auftreten registriert werden, da nur so eine Anzahl neu gestörter Ventile eindeutig definierbar ist.

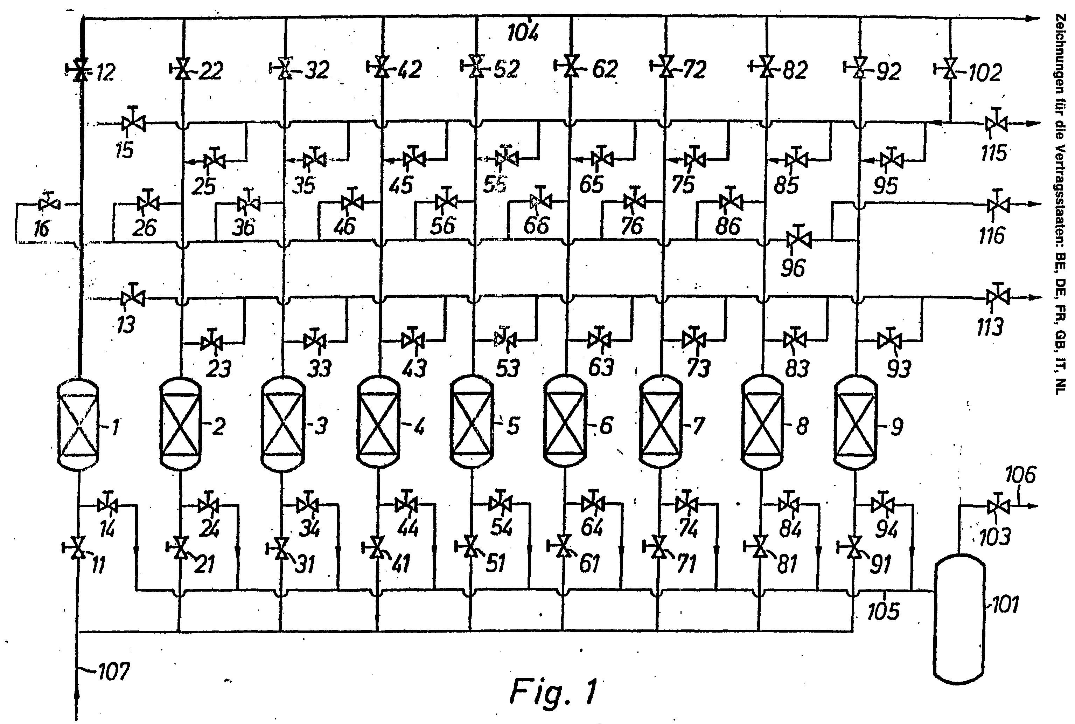

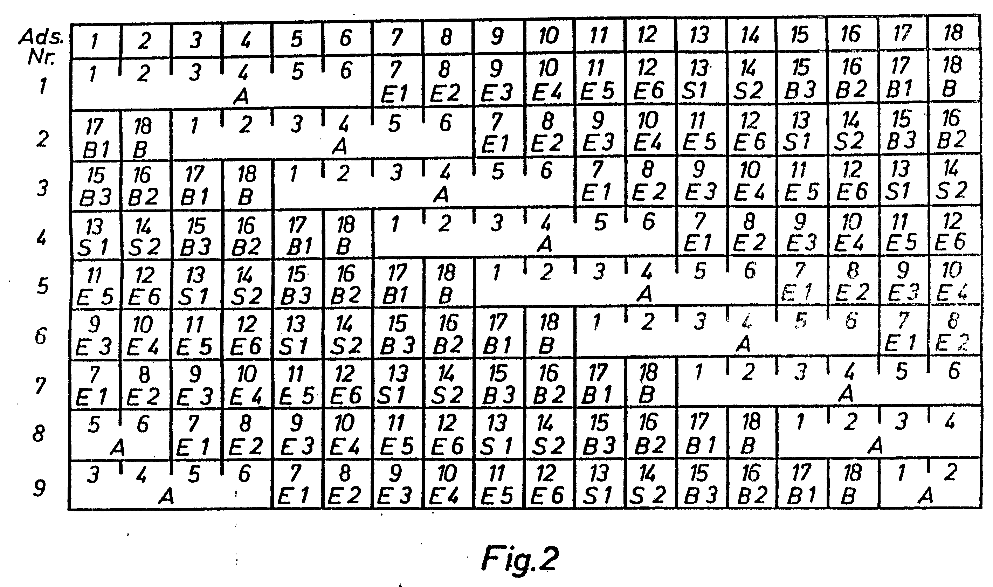

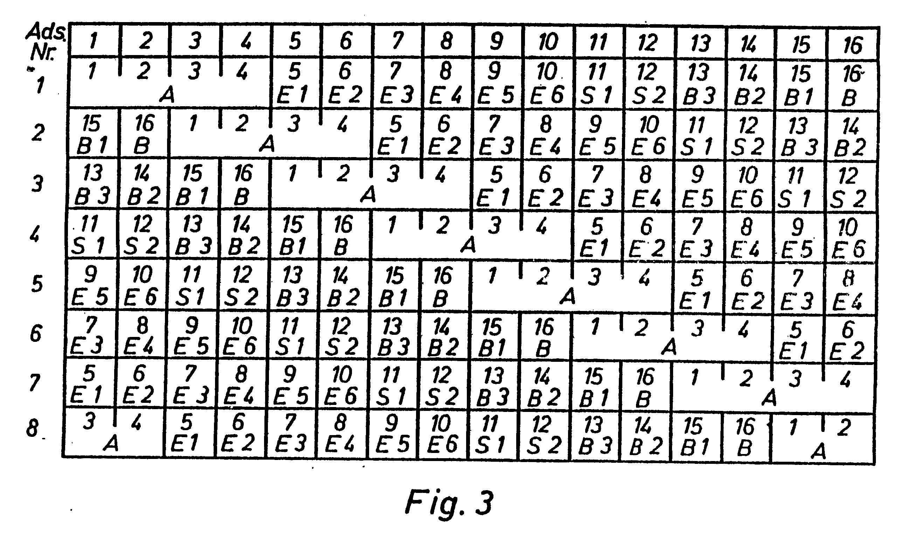

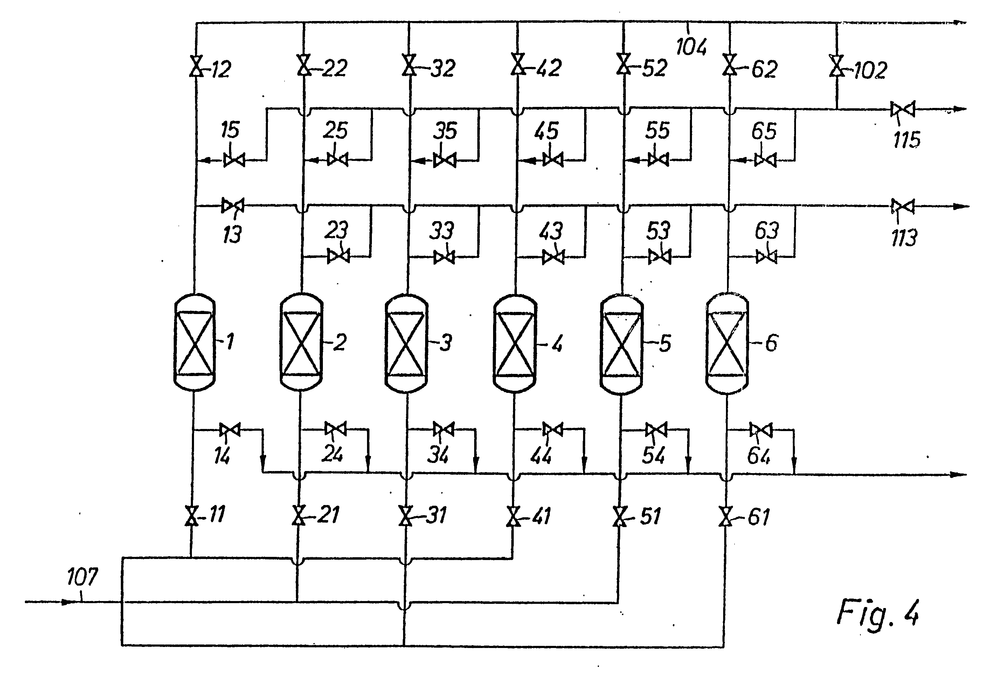

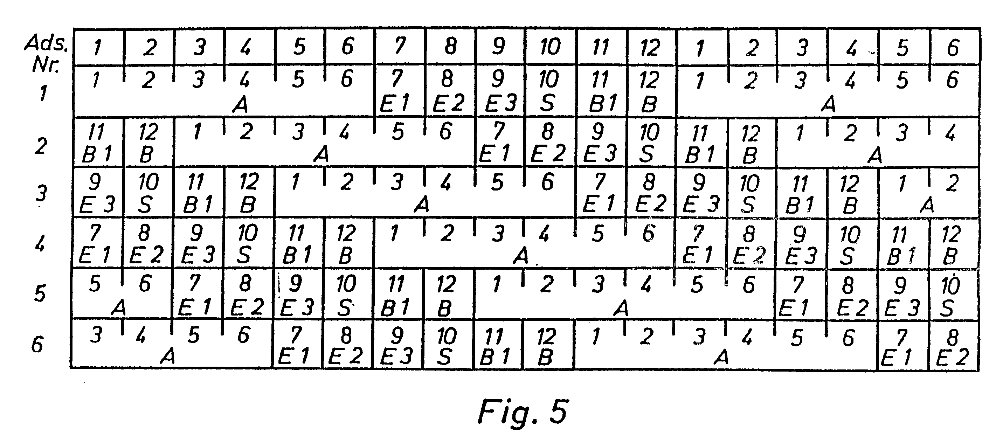

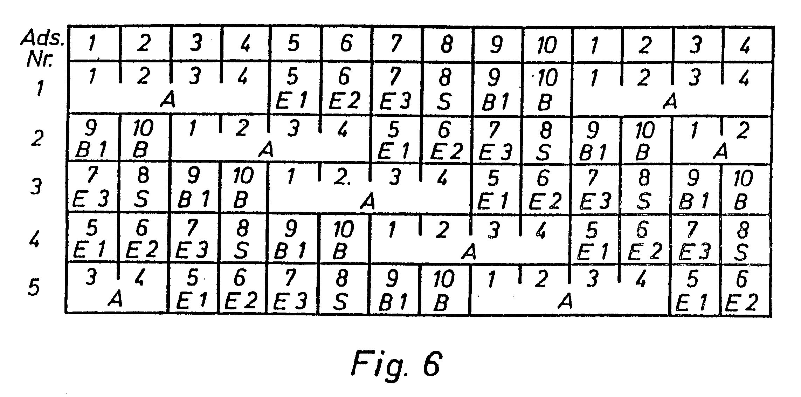

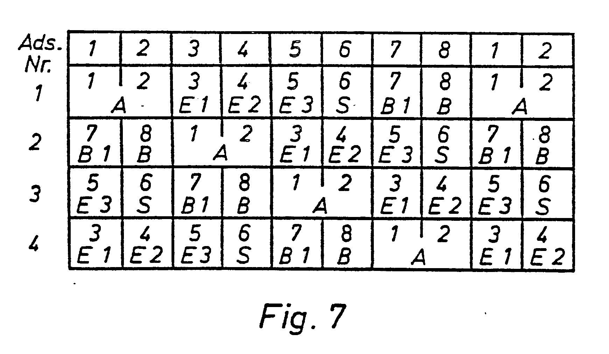

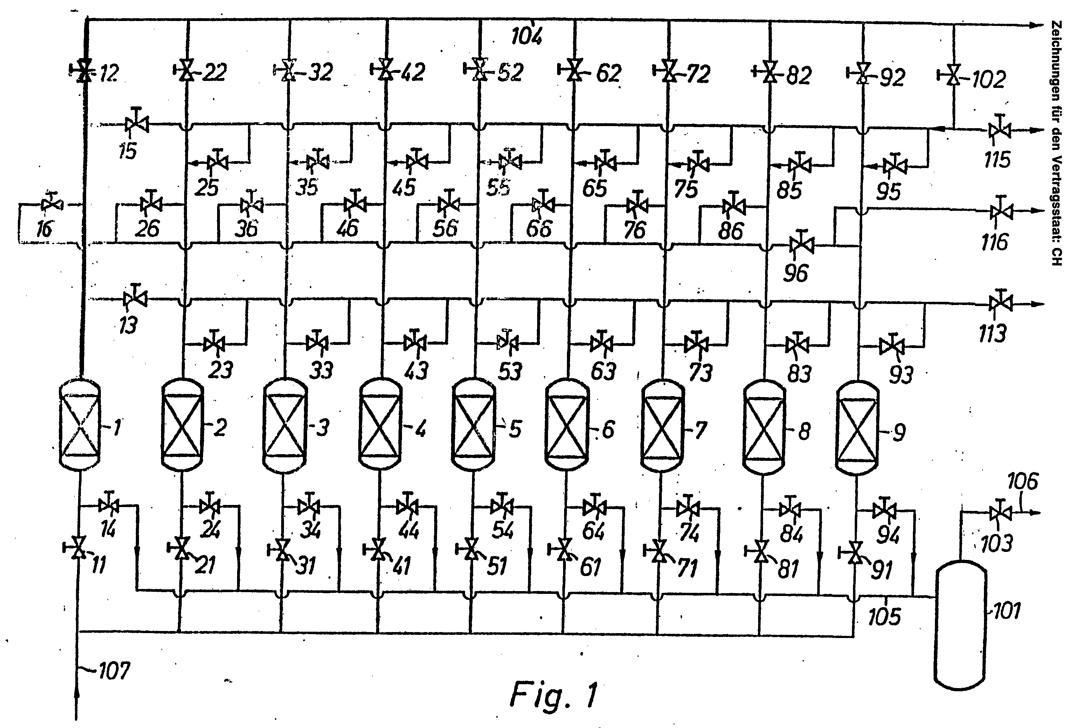

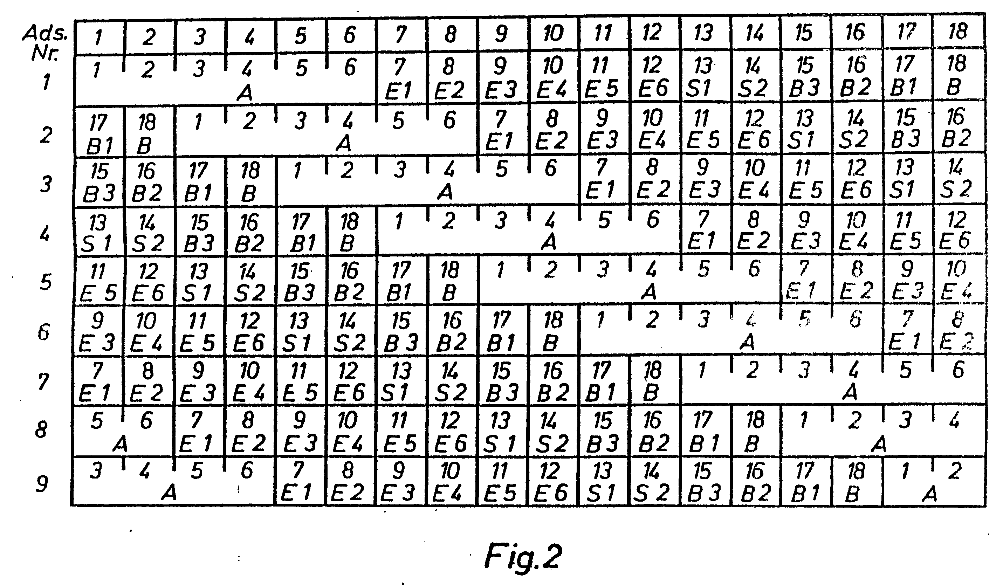

Zum besseren Verständnis sei die Erfindung zunächst an Hand der in der Fig. 1 dargestellten 9-Adsorberanlage und dem zugehörigen, in Fig. 2 dargestellten Taktschema dieser 9 Adsorber näher erläutert.

Durch Leitung 107 und Ventil 11 gelangt Rohgas in den Adsorber 1. Im Adsorber 1 werden die leichter adsorbierbaren Komponenten festgehalten, während die schwerer adsorbierbaren Komponenten die Anlage über das Ventil 12 und die Leitung 104 verlassen. Nach beendeter Adsorption wird der bisher zum Adsorber 1 geführte Teil des Rohgasstromes auf einen anderen Adsorber (im vorliegenden Fall auf den Adsorber 4) umgeschaltet und im Adsorber 1 der Druck auf einen ersten Zwischendruck gesenkt (E1). Dies geschieht durch Druckausgleich mit dem Adsorber 5 durch Öffnung der Ventile 15 und 55. Anschliessend wird der Druck im Adsorber 1 auf einen zweiten Zwischendruck gesenkt (E2), und zwar durch Druckausgleich mit dem Adsorber 6 über die Ventile 16 und 66, und auf einen dritten Zwischendruck (E3) durch Druckausgleich mit dem Adsorber 7 über die Ventile 16 und 76.

Während dieser Drucksenkungen im Adsorber 1, die in Adsorptionsrichtung erfolgen, wird der Druck in den Adsorbern 5, 6 und 7 erhöht (B1, B2 bzw. B3).

Danach wird der Druck im Adsorber 1 durch Öffnung der Ventile 13, 83 und 84 weiter gesenkt (E4). Das Gas aus dem Adsorber 1 strömt jetzt durch den Adsorber 8, der dabei von zuvor adsorbierten Komponenten vollständig freigespült wird (S2). Das sich ausbildende Gasgemisch gelangt über Leitung 105 in den Ausgleichsbehälter 101.

Anschliessend werden die Ventile 83 und 84 geschlossen und die Ventile 93 und 94 geöffnet (E5), wodurch der Adsorber 9 von einem Teil der zuvor adsorbierten Komponenten freigespült wird (S1). Beide Spülschritte erfolgen im Gegenstrom zur Adsorption.

Im Anschluss daran werden die Ventile 13, 93 und 94 geschlossen und das restliche, im Adsorber 1 befindliche Gas durch Öffnung des Ventils 14 als Restgas in den Behälter 101 abgelassen (E6). Danach hat der Adsorber 1 keinen Überdruck mehr und steht zum Spülen bereit.

Das Spülen (S1) wird durch eine Verbindung des Adsorbers 1 mit dem noch unter Druck stehenden Adsorber 2 über die geöffneten Ventile 23, 13 und 14 bewerkstelligt. Das Gas gelangt über Leitung 105 in den Behälter 101. Der Adsorber 2 durchläuft dabei seinen fünften Entspannungstakt (E5). Für den zweiten Spültakt (S2) des Adsorbers 1 wird das Ventil 23 geschlossen und das Ventil 33 geöffnet, so dass der Adsorber jetzt Spülgas aus dem Adsorber 3 erhält, der seinen vierten Entspannungstakt (E4) durchläuft. Das Gas gelangt wieder in den Behälter 101.

Die sich an die Spülung anschliessende Erhöhung des Druckes im Adsorber 1 wird in vier Schritten vorgenommen. Zu diesem Zweck wird der Adsorber 1 durch Schliessung des Ventils 14 und Öffnung der Ventile 46 und 16 mit dem Adsorber 4 in Druckausgleich gebracht (B3), wobei der letztere seinen dritten Entspannungstakt (E3) durchläuft. Die weitere Drucksteigerung im Adsorber 1 (B2) erfolgt durch Schliessung des Ventils 46 und Öffnung des Ventils 56, wobei der Adsorber 5 entspannt wird (E2). Die dritte Drucksteigerung (B1) erfolgt durch Schliessung des Ventils 56 und Öffnung der Ventile 65 und 15 und damit Verbindung mit dem Adsorber 6, der dabei ebenfalls eine Entspannung erfährt (E1). Die letzte Drucksteigerung (B) auf den Adsorptionsdruck wird mit abgezweigtem Produktgas vorgenommen, indem die Ventile 102 und 15 geöffnet werden. Der Adsorber 1 steht jetzt wieder für eine erneute Adsorption zur Verfügung.

Im Schema der Fig. 2 sind untereinander die Adsorber in der Numerierung der Fig. 1 aufgetragen, in der obersten Zeile die Taktnummern T und bei jedem Takt die Taktkennzahlen j der Tabelle 1 mit den zugehörigen Taktbezeichnungen, die sich ebenfalls aus Tabelle 1 ergeben.

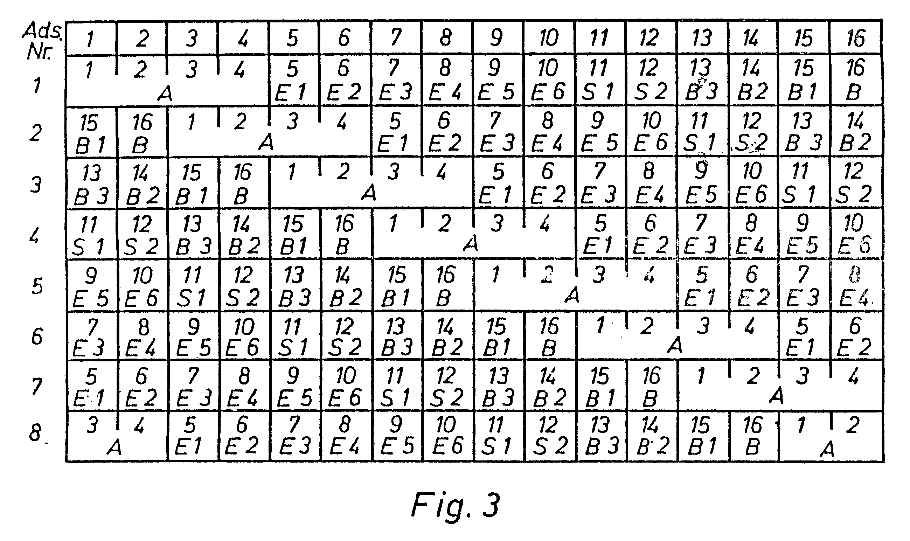

Bei den Fig. 3 und 5 bis 7 finden sich die gleichen Angaben in der gleichen Anordnung.

Aus dem Schema der Fig. 2 ist ersichtlich, dass bei der in Fig. 1 dargestellten Anlage stets drei Adsorber gleichzeitig, jedoch zeitlich etwas gegeneinander verschoben, auf Adsorption geschaltet sind. Bei jedem Adsorptionstakt gelangt also in jeden Adsorber nur $1/3$ der Rohgasmenge.

Das Taktschema, das bei der in Fig. 1 gezeigten Anlage ein jeder Adsorber zu durchlaufen hat, wurde lediglich am Beispiel des Adsorbers 1 geschildert. Es liegt für den Fachmann auf der Hand, dass die Taktschemata der übrigen Adsorber 2 bis 9, wie auch im übrigen zweifelsfrei aus dem Schema der Fig. 2 hervorgeht, dem Taktschema des Adsorbers 1 in allen Punkten entsprechen und lediglich zeitlich gegen dieses verschoben sind, so dass die Anlage insgesamt einen kontinuierlich fliessenden Produktgasstrom liefert.

Am Beispiel dieser 9-Adsorberanlage mit 6 Druckstufen sei nunmehr die Ermittlung eines Ventilfehlers nach der Erfindung dargestellt.

Der Zustand jedes Adsorbers ist durch seine Taktkennzahl j charakterisiert. Diese Taktkennzahl errechnet sich nach

$$j = T - 2(i-1) \qquad (1)$$

wobei
T = Taktnummer
i = Nummer des Adsorbers in der Reihenfolge der Adsorber.

Die maximale Taktnummer errechnet sich wie folgt:

$$T_{MAX} = 2n_A + 2m = 2n \qquad (2)$$

wobei
n = Anzahl der Adsorber
$n_A$ = Anzahl der gleichzeitig in Adsorption befindlichen Adsorber
m = Zahl der Druckstufen.

Erfindungsgemäss wird jeder Taktkennzahl eine Druckkennzahl $p_j$ zugeordnet, die im allgemeinen ein bestimmtes Druckniveau wiedergibt. Für eine Anlage mit 9 Adsorbern gemäss den Fig. 1 und 2 ergibt sich beispielsweise folgendes Schema für die Takt- bzw. Druckkennzahlen:

Tabelle 1

| Takt-kenn-zahl | Druck-kenn-zahl | Taktbe-zeich-nung | Taktbeschreibung |
|---|---|---|---|
| j = 1 | $p_j = 6$ | A | 1. Adsorptionstakt |
| j = 2 | $p_j = 6$ | A | 2. Adsorptionstakt |
| j = 3 | $p_j = 6$ | A | 3. Adsorptionstakt |
| j = 4 | $p_j = 6$ | A | 4. Adsorptionstakt |
| j = 5 | $p_j = 6$ | A | 5. Adsorptionstakt |
| j = 6 | $p_j = 6$ | A | 6. Adsorptionstakt |
| j = 7 | $p_j = 5$ | E1 | 1. Entspannungstakt |
| j = 8 | $p_j = 4$ | E2 | 2. Entspannungstakt |
| j = 9 | $p_j = 3$ | E3 | 3. Entspannungstakt |
| j = 10 | $p_j = 2$ | E4 | 4. Entspannungstakt |
| j = 11 | $p_j = 1$ | E5 | 5. Entspannungstakt |
| j = 12 | $p_j = 0$ | E6 | 6. Entspannungstakt |
| j = 13 | $p_j = 0$ | S1 | 1. Spültakt |
| j = 14 | $p_j = 0$ | S2 | 2. Spültakt |
| j = 15 | $p_j = 2$ | B3 | 1. Druckaufbautakt |
| j = 16 | $p_j = 3$ | B2 | 2. Druckaufbautakt |
| j = 17 | $p_j = 4$ | B1 | 3. Druckaufbautakt |
| j = 18 | $p_j = 5$ | B | 4. Druckaufbautakt |

Wie aus Fig. 1 ersichtlich, sind für jeden Adsorber insgesamt sechs Ventile erforderlich, nämlich drei Ventile für die Druckausgleiche und je ein Ventil für den Rohgaseintritt, den Produktgasaustritt und die Restgas-Entspannung.

Die Ventile sind entsprechend der folgenden Übersicht (Tabelle 2) bei folgenden Takten geöffnet:

Tabelle 2

| Ventile | Funktion | Öffnung bei j = |
|---|---|---|
| Vi1, Vi2 | Rohgaseintritt bzw Produktgasaustritt | 1 bis 6 |
| Vi3 | Entspannung bzw. Spülung | 10, 11, 13 und 14 |
| Vi4 | Entspannung ins Restgas und Spülung | 12, 13 und 14 |
| Vi5 | erste Entspannung bzw. dritter Druckausgleich und Bespannung mit·Produkt | 7, 17 und 18 |
| Vi6 | zweite und dritte Entspannung bzw. erster und zweiter Druckausgleich | 8, 9, 15 und 16 |

(i = Nummer des Adsorbers)

Wie bereits aus Tabelle 1 ersichtlich, ergeben sich für den Adsorber 1 der in Fig. 1 dargestellten Anlage für die Takte 1 bis 18 die in Tabelle 3 noch einmal zusammengefassten Druck-Kennzahlen $p_j$:

Tabelle 3

| T | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| $p_j$ | 6 | 6 | 6 | 6 | 6 | 6 | 5 | 4 | 3 | 2 | 1 | 0 | 0 | 0 | 2 | 3 | 4 | 5 |

Entsprechend der Funktionsweise der Ventile können auch dem jeweiligen Ventil-Nachdruck Druckkennzahlen $p_v$ zugeordnet werden. Sie sind in Tabelle 4 wiedergegeben.

Tabelle 4

| T | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| Vi1, 2 | 6 | 6 | 6 | 6 | 6 | 6 | 6 | 6 | 6 | 6 | 6 | 6 | 6 | 6 | 6 | 6 | 6 | 6 |
| Vi3 | 1 | 2 | 1 | 2 | 1 | 2 | 1 | 2 | 1 | 2 | 1 | 2 | 1 | 2 | 1 | 2 | 1 | 2 |
| Vi4 | 0 | 0 | 0 | 0 | 0 | 0 | 0 | 0 | 0 | 0 | 0 | 0 | 0 | 0 | 0 | 0 | 0 | 0 |
| Vi5 | 5 | 5 | 5 | 5 | 5 | 5 | 5 | 5 | 5 | 5 | 5 | 5 | 5 | 5 | 5 | 5 | 5 | 5 |
| Vi6 | 3 | 4 | 3 | 4 | 3 | 4 | 3 | 4 | 3 | 4 | 3 | 4 | 3 | 4 | 3 | 4 | 3 | 4 |

Diese erfindungsgemässe Zuordnung von Druckkennzahlen für den Ventil-Nachdruck ermöglicht es, die Fehlfunktionen von Ventilen, wenn sie auf einer Undichtheit des Ventils beruhen, zu ermitteln. Eine Ventilundichtheit bewirkt nämlich eine Druckdifferenz zwischen dem Ventil-Nachdruck (Druckkennzahl $p_v$) und dem Ventil-Vordruck (Adsorberdruck = Druckkennzahl $p_j$), die direkt messbar ist, und zwar durch Druckmessung an dem jeweiligen Adsorber und durch die Feststellung einer Druckabweichung gegenüber dem Druck-Sollwert am Ende eines jeden Taktes. Allerdings sind diese Abweichungen nur bei denjenigen Takten feststellbar, wo ein Druckausgleich zwischen zwei geschlossenen Volumina erfolgt (z.B. bei j = 7, 8, 9, 15, 16 und 17).

Definitionsgemäss beträgt die Druckdifferenz $\Delta_p$ an einem Ventil

$$\Delta_p = p_v - p_j \qquad (3)$$

Wenn eine Fehlfunktion vorliegt, ist $\Delta_p \neq 0$. Dementsprechend gibt es die Möglichkeit einer positiven Abweichung ($\Delta_p$ grösser 0), wenn Gas durch eine Ventilundichtheit in einen Adsorber einströmt, und einer negativen Abweichung ($\Delta_p$ kleiner 0), wenn Gas durch eine Ventilundichtheit aus dem Adsorber ausströmt.

Wie bereits weiter oben ausgeführt, können, wenn bei einem Adsorber eine von Null verschiedene Druckdifferenz gemessen wurde, mehrere Ventile dafür verantwortlich sein. Zur Ermittlung des tatsächlich defekten Ventils ist es notwendig, für jeden Takt die Stelle desjenigen Adsorbers zu berechnen, der mit einem bestimmten Adsorber in Druckausgleich steht.

Die jeweiligen Positionen des «abgebenden Adsorbers» und des «annehmenden Adsorbers» lassen sich entweder mit Hilfe eines die Fig. 2 wiedergebenden Gleichungssystems berechnen oder aus der Position innerhalb der Firg. 2 entnehmen.

Das erfindungsgemässe Verfahren der Ermittlung von Fehlfunktionen von Ventilen sei im nachfolgenden an einem Beispiel beschrieben.

Beispiel 1

Bei einer Anlage mit neun Adsorbern gemäss Fig. 1 und einem Zeitablaufschema gemäss Fig. 2 mit sechs Druckstufen (m = 6) sei angenommen, dass beim Adsorber 1 im Takt 7 bzw. gegen Ende des Taktes 7 ein gegenüber dem Soll-Druck zu niedriger Druck gemessen wird. Im Sinne der obigen Definition handelt es sich also um eine negative Abweichung.

Zur Identifizierung des diese negative Abweichung verursachenden defekten Ventils werden folgende Überlegungen bzw. Berechnungen durchgeführt:

Aus Tabelle 3 geht hervor, dass für den Adsorber 1 bei j = 7 die Druckkennzahl $p_j$ 5 beträgt. Als defekte Ventile kommen dann alle Ventile des Adsorbers 1 in Frage, die in diesem Takt eine Druckkennzahl $p_v$ kleiner als 5 haben. Nach Tabelle 4 sind das für den Takt 7 die Ventile Vi3, Vi4 und Vi6.

Verdächtig sind mithin die Ventile 13, 14 und 16.

Das gleiche gilt auch für die Ventile desjenigen Adsorbers, mit dem der Adsorber 1 im Takt 7 in Druckausgleich steht. Nach Gleichung 5 ist das im betrachteten Beispiel der Adsorber 5.

Der Takt $j_E$, in dem sich der Adsorber 5 beim Druckausgleich mit dem Adsorber 1 befindet, kann entweder aus Fig. 2 abgelesen oder berechnet werden. Er ergibt sich zu $j_E = 17$.

Nach Tabelle 4 haben im Takt 17 die Ventile Vi3, Vi4 und Vi6 eine Druckkennzahl unter 5. Beim Adsorber 5 sind daher die Ventile 53, 54 und 56 als verdächtig anzusehen.

Darüber hinaus sind in den Kreis der verdächtigen Ventile noch diejenigen einzubeziehen, die einerseits mit der benutzten Entspannungsleitung verbunden sind (im Beispiel hier die Ventile Vi5) und andererseits die, die zu Adsorbern gehören, die während des Taktes 7 des Adsorbers 1 eine niedrigere Druckkennzahl als 5 haben.

In welchem Takt sich die einzelnen Adsorber befinden, kann berechnet oder aus Fig. 2 abgelesen werden.

Für den Adsorber 2 ergibt sich z.B. für T = 7 und i = 2 eine Taktkennzahl j = 5. Die Druckkennzahl ist dann für diesen Adsorber nach Tabelle 1 $p_j = 6$, d.h. die Ventile dieses Adsorbers sind nicht defekt.

Führt man diese Berechnung für alle anderen Adsorber durch, so ergeben sich als weitere verdächtige Ventile die Ventile 65, 75, 85 und 95, so dass damit insgesamt folgende Ventile verdächtig sind: 13, 14, 16, 53, 54, 56, 65, 75, 85 und 95.

Durch Verfolgen des weiteren Druckverlaufs im Adsorber 1 kann der Kreis der verdächtigen Ventile nunmehr eingeengt werden. Dabei wird bei einer vorangegangenen negativen Abweichung auf das erstmalige Auftreten einer positiven Abweichung geachtet.

Wird z.B. im Takt 17 beim Adsorber 1 ein zu hoher Druck festgestellt (positive Abweichung), so kann analog zum vorbeschriebenen Vorgehen eine Liste verdächtiger Ventile aufgestellt werden.

Die Druckkennzahl des Adsorbers 1 ist beim Takt 17 nach Tabelle 3 $p_j = 4$. Da es sich bei der angenommenen Abweichung um eine positive Abweichung handelt, kommen jetzt als verdächtig alle Ventile in Frage, die eine Druckkennzahl $p_v$ grösser als 4 haben. Nach Tabelle 4 sind das die Ventile Vi1, Vi2 und Vi5. Das Ventil Vi5 entfällt, da es während dieses Taktes geöffnet ist. Es bleiben mithin als verdächtige Ventile die Ventile 11 und 12.

Während dieses Taktes steht der Adsorber 1 im Druckausgleich mit dem Adsorber 6. Mithin sind die Ventile 61 und 62 verdächtig.

Mit der dabei benutzten Entspannungsleitung stehen ausserdem die Ventile Vi5 der Adsorber 7, 8 und 9 in Verbindung. Infolgedessen ergeben sich als verdächtig die Ventile 75, 85 und 95.

Der Kreis der durch die negative Abweichung im Takt 7 festgestellten Ventile kann auf die Ventile 75, 85 und 95 eingeschränkt werden, da nur diese Ventile sowohl an der negativen als auch an der positiven Druckabweichung schuld sein können.

Um aus diesen drei verdächtigen Ventilen das defekte zu identifizieren, wird der Druck in den anderen Adsorbern auf Abweichungen hin verfolgt. Eine angenommene positive Abweichung des Druckes des Adsorbers 9 im Takt 8 weist dann eindeutig darauf hin, dass das Ventil 95 defekt ist.

Diese erfindungsgemässe Ermittlungsmethode sei noch einmal kurz zusammengefasst:

Erste negative Abweichung bei Adsorber 1 im Takt 7. Verdächtige Ventile: 13, 14, 16, 53, 54, 56, 65, 75, 85 und 95.

Erste positive Abweichung bei Adsorber 1 im Takt 17. Verdächtige Ventile: 11, 12, 61, 62, 75, 85 und 95.

Erste positive Abweichung bei Adsorber 9 im Takt 8. Verdächtige Ventile: 91, 92, 51, 95, 55, 16, 26, 36 und 46.

Als eindeutig identifiziertes defektes Ventil ergibt sich das Ventil 95, denn nur dieses Ventil kann alle drei beobachteten Druckabweichungen verursacht haben.

Die erfindungsgemässe Methode zur Fehlerermittlung lässt sich besonders vorteilhaft dann anwenden, wenn für die Steuerung einer n-Adsorber-Anlage ein Prozessrechner eingesetzt wird. Man kann dann die zuletzt aufgeführte Tabelle im Speicher des Rechners so abspeichern, dass die Taktzahlen der ersten positiven und der ersten negativen Abweichung jeweils die Adressen einer «verdächtigen Menge» sind. Bei einer Abweichung vom Soll-Wert werden dann automatisch alle Taktzahlen registriert, die verdächtigen Ventile definiert und durch eine logische UND-Abfrage aller Mengen das betreffende Ventil lokalisiert.

Ist nunmehr anhand des im Vorstehenden beschriebenen Rechenverfahrens ein Ventil als undicht identifiziert, dann wird der zugehörige Adsorber durch Schliessung aller im zugeordneten Ventil und gegebenenfalls zusätzlicher Handventile abgeblockt. Die Adsorberanlage muss nunmehr mit den verbleibenden Adsorbern weiterbetrieben werden. Wie dies im einzelnen zu bewerkstelligen ist, sei im folgenden im einzelnen erläutert.

Bei einer Adsorberanlage mit n Adsorbern, von denen $n_A$ Adsorber gleichzeitig im Adsorptionstakt sind und wo mit m Druckstufen gearbeitet wird, ergibt sich für den Gesamtzyklus eines Adsorbers eine Taktanzahl von $T = 2n_A + 2m$.

Die Taktanzahl für eine Adsorptionsphase ist $2n_A$.

Vermindert man die Anzahl der Adsorber um x Adsorber, so ergibt sich eine neue Taktanzahl von $T = 2n_A + 2m - 2x$.

Bei Beibehaltung der Zahl der Druckstufen m können maximal $(n_A - 1)$ Adsorber herausgeschaltet werden. Um mit der verminderten Adsorberzahl die gleiche Gasmenge wie zuvor reinigen zu können, muss dann die Adsorptionsphase auf $2(n_A - x)$ Takte reduziert werden.

Die Produktausbeute ist von der Anzahl der Druckstufen m abhängig. Daraus ergibt sich, dass bei der Wegschaltung von x Adsorbern ohne Veränderung der Anzahl der Druckstufen m im wesentlichen die gleiche Produktausbeute erzielt werden kann wie mit der vollen Adsorberzahl. Verkürzt man die Adsorptionszeit wie zuvor beschrieben, dann kann auch nahezu die gleiche Produktgasmenge erzeugt werden.

Beim Abblocken eines Adsorbers sind zur Anpassung der Taktfolge auf die verminderte Adsorberzahl folgende Schritte durchzuführen:

1. der fehlerhafte Adsorber i wird durch Schliessen aller zu ihr gehörenden Ventile und gegebenenfalls durch zusätzliche Handabsperrventile abgeblockt.

2. Bei Ausfall des Adsorbers i in einem Takt j mit gerader Zahl laufen die Adsorber mit den Nummern bis $i + \dfrac{j}{2} - 1$, bei Ausfall in einem Takt j mit ungerader Zahl die Adsorber bis $i + \dfrac{j+1}{2} - 1$ zwei Takte im ursprünglichen Programm weiter.

Alle übrigen Adsorber beharren in dem Zustand, in dem sie sich bei Ausfall des Adsorbers 1 befanden.

Nach diesen zwei Takten sind die verbliebenen Adsorber in ihren Druckstufen der neuen Taktfolge angepasst.

Während dieses Synchronisationsverfahrens werden Druckausgleichs- oder Überströmvorgänge zwischen zwei Adsorbern, soweit möglich, normal durchgeführt. Ist das nicht möglich, da der korrespondierende Adsorber ausgefallen oder in Warteposition ist, wird das Gas über Zusatzventile abgeführt. Für jede Überströmleitung wird deshalb ein Zusatzventil benötigt.

Das Volumen des zu reinigenden Rohgases pro Adsorber wird während der zwei Synchronisationstakte auf dem Wert bei Ausfall des einen Adsorbers gelassen und kann dann je nach Beladungszustand der Adsorber sofort oder spätestens nach weiteren zwei Takten um den Faktor

$$\frac{n_A}{n_A - x}$$

erhöht werden, um die im wesentlichen gleiche Produktmenge mit der verminderten Adsorberzahl zu erzeugen.

Um den Produktausfall möglichst klein zu halten, besteht erfindungsgemäss die Möglichkeit, das Volumen des Rohgases schon während der zwei Synchronisationstakte zu erhöhen, wenn die Anlage bei Ausfall eines Adsorbers im Unterlastbetrieb gefahren wurde.

Maximal ist also bei dem erfindungsgemässen Synchronisationsverfahren auf eine verminderte Adsorberanzahl eine Produktverminderung für die Dauer von vier Takten zu erwarten.

Das erfindungsgemässe Synchronisationsverfahren sei nunmehr anhand einiger Beispiele erläutert.

Beispiel 2

Bei einer Druckwechsel-Adsorptionsanlage mit neun Adsorbern, wie sie beispielsweise in Fig. 1 dargestellt ist und die eine Taktfolge gemäss der Fig. 2 haben, sei im Takt 9 des Adsorbers 1 eine Fehlfunktion eines zu Adsorber 1 gehörenden Ventils erkannt.

Der Adsorber 1 muss daher stillgelegt und die Anlage an eine Taktfolge für acht Adsorber angepasst werden. Diese Taktfolge für acht Adsorber ist in Fig. 3 dargestellt. Wie ersichtlich, sind nach der Umschaltung nur noch zwei Adsorber gleichzeitig in Adsorption. Ausserdem ist die Anzahl der Adsorptionstakte von sechs auf vier vermindert.

In der nachfolgenden Tabelle 5 sind die Taktzahlen der einzelnen Adsorber aufgeführt. In der zweiten Spalte ist der Zustand bei Ausfall des Adsorbers 1 wiedergegeben, in der dritten und in der vierten Spalte der Synchronisationsvorgang und in der fünften Spalte das Ende des Synchronisationsvorganges, das gleichzeitig der Anfang des 8-Adsorber-Programms nach Fig. 3 ist.

Tabelle 5

| 9-Adsorberprogramm | | | | 8-Adsorberprogramm |
|---|---|---|---|---|
| Ads. Nr. | Takt Nr. | Takt Nr. | Takt Nr. | Takt Nr. |
| 1 | 9 | – | – | – |
| 2 | 7 | 8 | 9 | 7 |
| 3 | 5 | 6 | 7 | 5 |
| 4 | 3 | 4 | 5 | 3 |
| 5 | 1 | 2 | 3 | 1 |
| 6 | 17 | 17 | 17 | 15 |
| 7 | 15 | 15 | 15 | 13 |
| 8 | 13 | 13 | 13 | 11 |
| 9 | 11 | 11 | 11 | 9 |

Das in den Takten 7 und 8 anfallende Entspannungsgas des Adsorbers 2 wird während der Synchronisation über die Zusatzventile 115 bzw. 116 (siehe Fig. 1) abgeleitet, da sich die korrespondierenden Adsorber 6 und 7 (Adsorber 6 im Takt 16) in Warteposition befinden.

Beispiel 3

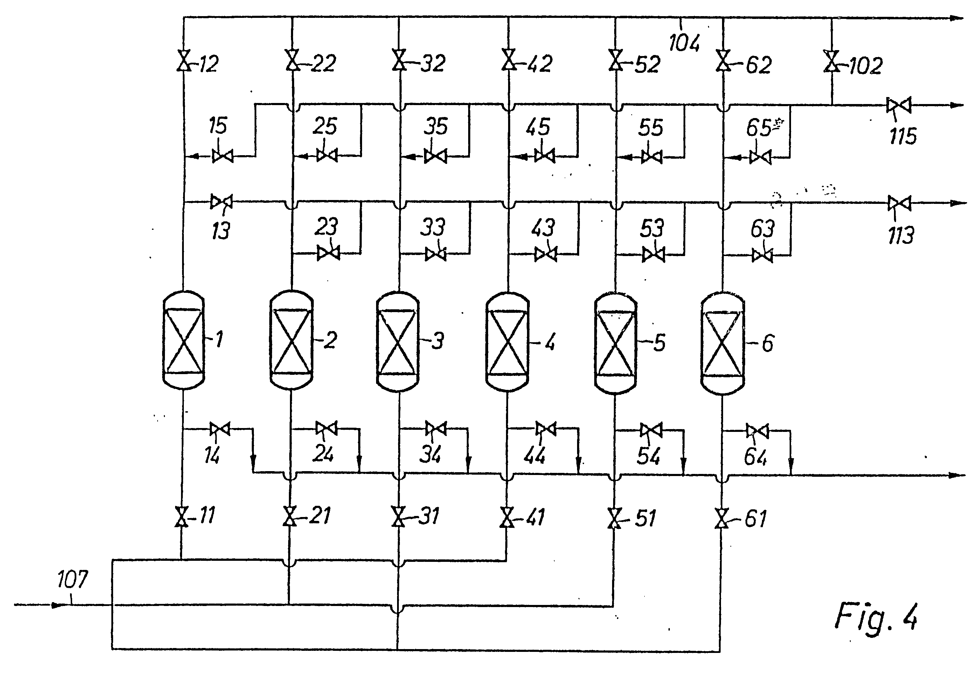

In Fig. 4 ist eine Druckwechsel-Adsorptionsanlage mit sechs Adsorbern 1 bis 6 dargestellt, wobei die Ventile, deren Funktion mit den Ventilen der Fig. 1 übereinstimmt, mit den gleichen Bezugsziffern versehen wurden. Demzufolge sind die Rohgaseintrittsventile mit 11 bis 61 beziffert, die Reingasaustrittsventile mit 12 bis 62, die Restgasaustrittsventile mit 14 bis 64, die Überströmventile mit 13 bis 63 und die Produktgaswiederaufdrückventile mit 15 bis 65. Das Rohgas gelangt in die Anlage durch die Leitung 107, das Produktgas verlässt sie durch Leitung 104. 102 ist ein Abzweigventil für Produkt-Druckauffüllgas und die Leitungen 113 und 115 sind Restgasleitungen, die während des Synchronisationsvorganges benötigt werden.

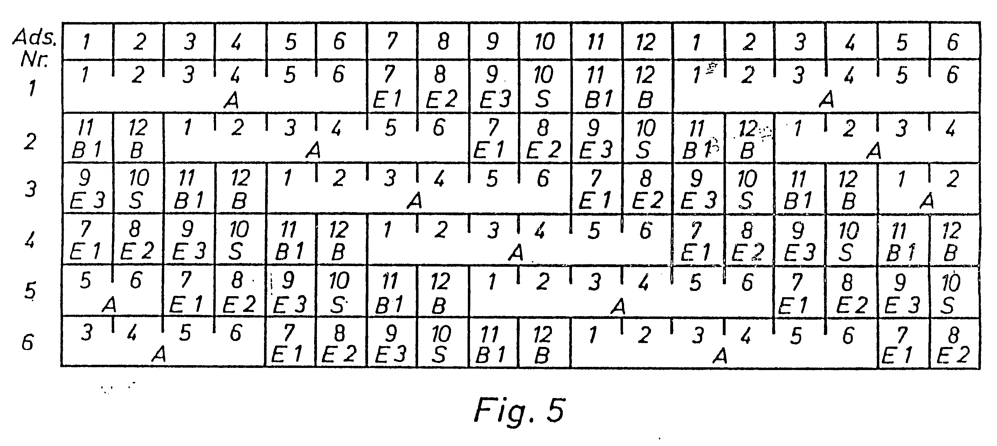

Die Taktfolge der sechs Adsorber ist in Fig. 5 wiedergegeben.

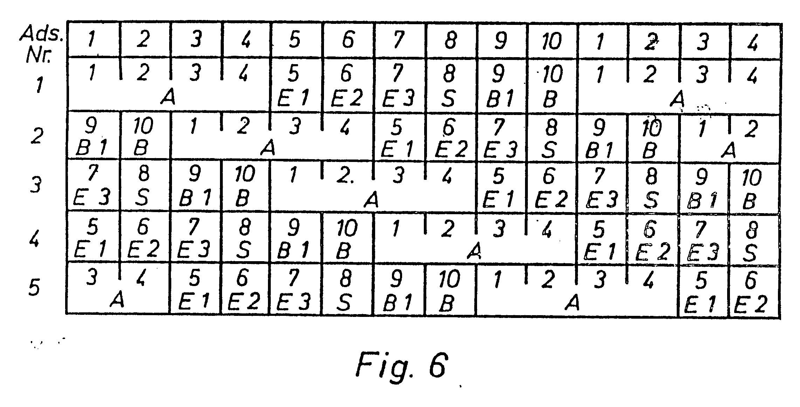

Bei einer derartigen Anlage sei angenommen, dass ein Adsorber wegen einer Fehlfunktion eines Ventils im Takt 8 stillgelegt werden muss. Die Anlage wird demgemäss an eine Taktfolge für fünf Adsorber, wie sie in Fig. 6 dargestellt ist, angepasst.

Der Synchronisationsvorgang ist ausserdem in der nachfolgenden Tabelle 6 dargestellt.

### Tabelle 6

| 6-Adsorberprogramm | | | 8-Adsorberprogramm |
|---|---|---|---|
| Ads. Nr. Takt Nr. | Takt Nr. | Takt Nr. | Takt Nr. |
| 1   8 | – | – | – |
| 2   6 | 7 | 8 | 6 |
| 3   4 | 5 | 6 | 4 |
| 4   2 | 3 | 4 | 2 |
| 5   12 | 12 | 12 | 10 |
| 6   10 | 10 | 10 | 8 |

Das im Takt 7 anfallende Entspannungsgas des Adsorbers 2 wird über das Zusatzventil 115 (siehe Fig. 4) abgeblasen.

Beispiel 4

Bei der in Fig. 4 dargestellten Anlage mit sechs Adsorbern sei angenommen, dass die Adsorber 2 und 3 wegen einer Fehlfunktion des Adsorbers 2 im Takt 9 und des Adsorbers 3 im Takt 7 stillgelegt werden müssen.

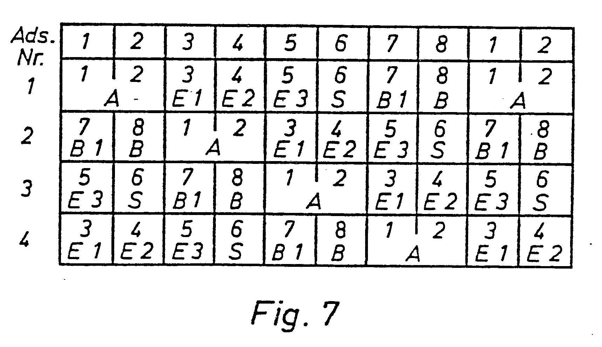

Die Anlage wird demzufolge an eine Taktfolge für vier Adsorber angepasst. Diese Taktfolge ist in Fig. 7 dargestellt. Der Synchronisationsvorgang, der sich durch den gleichzeitigen Ausfall von zwei Adsorbern auf die doppelte Taktzahl verlängert, ist in der nachfolgenden Tabelle 7 wie in den vorangegangenen Beispielen dargestellt.

### Tabelle 7

| 6-Ads. Programm | | | 5-Ads. Programm | | | 4-Ads. Programm |
|---|---|---|---|---|---|---|
| Ads. Nr. | Takt Nr. | Takt Nr. | Takt Nr. | Takt Nr. | Takt Nr. | Takt Nr. |
| 1 | 11 | 11 | 11 | 9 | 9 | 9 | 7 |
| 2 | 9 | – | – | – | – | – | – |
| 3 | 7 | – | – | – | – | – | – |
| 4 | 5 | 6 | 7 | 5 | 6 | 7 | 5 |
| 5 | 3 | 4 | 5 | 3 | 4 | 5 | 3 |
| 6 | 1 | 2 | 3 | 1 | 2 | 3 | 1 |

**Patentansprüche für die Vertragsstaaten:**
**BE, DE, FR, GB, IT, NL**

1. Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft, bei dem für die Adsorber und/oder die Ventile der Druckwechsel-Adsorptionsanlage als messbare physikalische Grösse der Druck in Adsorbern oder Leitungen ausgewählt und laufend messend verfolgt wird und beim Auftreten von Differenzen zwischen Soll- und Ist-Werten der Drücke die dadurch als defekt ermittelten Apparateteile abgeblockt werden, dadurch gekennzeichnet, dass die Drücke während jedes Taktes festgestellt, Abweichungen von den Sollwerten jedoch nur bei ihrem ersten Auftreten registriert werden und die nach dem Abblocken verbleibenden Adsorber teilweise bis zu vorher festgelegten Takten weiterlaufen und teilweise in ihrem Zustand verharren, bis alle verbliebenen Adsorber einer ihrer Anzahl entsprechenden Taktfolge angepasst sind.

2. Verfahren nach Anspruch 1, dadurch gekennzeichnet, dass die erste positive und die erste negative Abweichung von einem bestimmten Soll-Wert mit dem sie verursachenden Ventil in Korrelation gebracht und das Ventil auf diese Weise identifiziert wird.

3. Verfahren nach Anspruch 1, dadurch gekennzeichnet, dass bei Abblockung eines Adsorbers i in einem Takt mit gerader Taktkennzahl j die Adsorber mit den Nummern bis zu

$$i + \frac{j}{2} - 1$$

zwei Takte im ursprünglichen Programm weiterlaufen, wobei
j = T − 2 (i − 1)
T = Taktnummer
i = Nummer des Adsorbers in der Reihenfolge der Adsorber.

4. Verfahren nach Anspruch 1, dadurch gekennzeichnet, dass bei Abblockung eines Adsorbers i in einem Takt mit ungerader Taktkennzahl j die Adsorber mit den Nummern bis zu

$$i + \frac{j+1}{2} - 1$$

zwei Takte im ursprünglichen Programm weiterlaufen, wobei

j = T − 2 (i − 1)
T = Taktnummer
i = Nummer des Adsorbers in der Reihenfolge der Adsorber.

5. Verfahren nach den Ansprüchen 3 und 4, dadurch gekennzeichnet, dass die übrigen Adsorber in Wartestellung bleiben.

6. Verfahren nach den Ansprüchen 3 und 4, dadurch gekennzeichnet, dass die für die abgeblockten oder in Wartestellung befindlichen Adsorber im ursprünglichen Programm vorgesehenen Druckausgleichs- oder Überströmgase über Zusatzventile abgeführt werden.

7. Verfahren nach den Ansprüchen 3 bis 6, dadurch gekennzeichnet, dass das Volumen des zu reinigenden Gasstromes während der zwei Takte unverändert bleibt.

8. Verfahren nach den Ansprüchen 3 bis 7, dadurch gekennzeichnet, dass das Volumen des zu reinigenden Gasstromes nach den zwei Takten um den Faktor

$$, \quad \frac{n_A}{n_A - x}$$

vergrössert wird, wobei
$n_A$ = Zahl der gleichzeitig in Adsorption befindlichen Adsorber,
x = Zahl der abgeblockten Adsorber.

## Beschreibung für den Vertragsstaat: CH

Verfahren zum Betrieb einer zyklisch arbeitenden Druckwechsel-Adsorptionsanlage

Die Erfindung betrifft ein Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft.

Zur Reinigung und Zerlegung von Gasen, beispielsweise zur Reinigung von Erdgas oder zur Zerlegung von Edelgasen, Luft, Stadtgasen, Spaltgasen, wasserstoffreichen Gasgemischen oder gasförmigen Kohlenwasserstoffen werden heutzutage wegen ihrer Wirtschaftlichkeit und wegen ihrer Effektivität häufig Adsorptionsverfahren eingesetzt. Ganz besonders bewährt haben sich in der letzten Zeit Verfahren, die quasi-isotherm ablaufen und als Druckwechsel-Adsorptionsverfahren bekannt sind. Bei ihnen wird die Desorption bzw. Regenerierung des beladenen Adsorbens nicht durch eine Temperaturerhöhung bewerkstelligt, die eine nachfolgende Abkühlung auf die Adsorption erforderlich machen würde, sondern lediglich durch Drucksenkung über dem beladenen Adsorbens, wobei die Desorption in ihren letzten Stadien häufig durch Anwendung eines Spülgases komplettiert wird. Es ist ausserdem Stand der Technik, die bei der Druckentlastung eines beladenen Adsorbers freiwerdenden Gase mehr oder weniger vollständig zur Druckerhöhung in anderen Adsorbern, die sich auf einem niedrigeren Druckniveau befinden, einzusetzen.

So ist beispielsweise aus der DE-OS 2 624 346 bekannt, zur Reinigung bzw. Zerlegung einiger der eingangs genannten Gasgemische Druckwechsel-Adsorptionsanlagen einzusetzen, die mit bis zu neun Adsorbern bestückt sind. Jedem der Adsorber sind bei der bekannten Anlage sechs Ventile zugeordnet. An die bei höherem Druck vorgenommene Adsorption schliessen sich beim bekannten Verfahren mehrere Entspannungsschritte an, durch die zunächst das in den Hohlräumen des Adsorptionsmittels befindliche Gas, später aber auch adsorbierte Komponenten freigesetzt werden. Die ersten Entspannungsschritte werden durch Druckausgleich mit anderen, auf niedrigeren Drücken befindlichen Adsorbern durchgeführt, die auf diese Weise wieder auf einen gewissen Druck gebracht werden. Nur das bei der letzten Entspannungsstufe anfallende Gas wird als Restgas abgezogen, woran sich eine Gegenstromspülung anschliesst, um möglichst alle adsorbierten Komponenten aus dem Adsorbens zu entfernen. In einer Anzahl von Druckaufbauschritten, zum grossen Teil durch Druckausgleich mit anderen, auf höheren Drücken befindlichen Adsorbern, wird der Druck dann im desorbierten Adsorber wieder erhöht, wobei die letzte Druckerhöhung auf Adsorptionsdruck mit Produktgas erfolgt.

Bei derartigen Anlagen beträgt die Dauer der einzelnen Takte innerhalb eines Zyklus, bis der Adsorber wieder in seinen Ausgangszustand zurückgekehrt ist, oft nur einige Minuten. Mitunter liegen die Taktzeiten sogar nur in der Grössenordnung von Sekunden.

Es liegt auf der Hand, dass ein so schneller Wechsel der Drücke und der Gasflüsse hohe Anforderungen an die Belastbarkeit der Adsorber, der Leitungen und der Ventile stellt, insbesondere wenn man berücksichtigt, dass bei derartigen Anlagen mit einer Lebensdauer von zehn Jahren gerechnet wird. Obwohl diesen Tatsachen bei der Auslegung solcher Anlagen Rechnung getragen wird, kommt es doch mitunter zu Schäden, die auf Materialermüdung oder Materialfehler zurückzuführen sind, Schäden, die sowohl die Adsorber als auch die Leitungen oder die Ventile befallen können, die sich in der Regel als Druckverluste in den Adsorbern und im Leitungssystem äussern und die es notwendig machen, die Anlage stillzulegen, sämtliche Apparateteile zu testen, die defekten zu ermitteln, zu reparieren oder gegen neue auszutauschen und die Anlage dann wieder in Betrieb zu setzen. Derartige Stillstandszeiten bringen ausserordentliche wirtschaftliche Nachteile mit sich, insbesondere, wenn die in dem Adsorptionsverfahren gewonnenen Fraktionen in stetiger Menge an andere, ebenfalls kontinuierlich arbeitende Anlagen zur Weiterverarbeitung abgegeben werden müssen.

Es ist deshalb die Aufgabe der vorliegenden Erfindung, ein Verfahren zu schaffen, das es ermöglicht, Fehler schnell zu erkennen und eine Druckwechsel-Adsorptionsanlage dann unter Ausschaltung der als fehlerhaft erkannten Teile mit einer verminderten Anzahl von Apparateteilen weiterzufahren, so dass insgesamt ein vollständig kontinuierlicher Betrieb gewährleistet ist.

Diese Aufgabe wird erfindungsgemäss dadurch gelöst, dass für die Adsorber und/oder die Ventile der Druckwechsel-Adsorptionsanlage messbare physikalische Grössen ausgewählt und laufend messend verfolgt werden und dass beim Auftreten von Differenzen zwischen Soll- und Ist-Werten dieser Grössen die dadurch als defekt ermittelten Apparateteile abgeblockt werden und die verbleibenden Adsorber teilweise bis zu vorher festgelegten Takten weiterlaufen und teilweise in ihrem Zustand verharren, bis alle verbliebenen Adsorber einer ihrer Anzahl entsprechenden Taktfolge angepasst sind.

Zur Durchführung des erfindungsgemässen Verfahrens können die Ventile einer Druckwechsel-Adsorptionsanlage mit einem Stellungsanzeiger versehen werden, der die Stellung eines Ventils signalisiert. Stimmt die Stellung nicht mit der Soll-Stellung des Ventils überein, dann lässt sich dies durch eine einfache Signalgebung erkennen, und es können Massnahmen zur Fehlerbehebung getroffen werden. Dieses erfindungsgemässe Verfahren hat den Vorteil, dass sich mit Hilfe der Stellungsanzeiger ein defektes Ventil sofort eindeutig identifizieren lässt, doch leidet es unter dem Mangel, dass Ventilfehler, die z.B. auf einer Undichtheit des Sitzes beruhen, nicht erkannt werden können.

Undichtheiten im Ventilsitz sind Fehler, deren Auswirkungen sich erst allmählich bemerkbar machen und die vor allen Dingen deswegen schwer feststellbar sind, weil sie sich nur in Druckabweichungen in Adsorbern oder Leitungen äussern, die noch mit anderen Leitungen, Ventilen und Adsorbern in Verbindung stehen.

Die Erfindung besitzt den entscheidenden Vorteil, gerade auch für solche Fehler eine rasche und sichere Ortungsmethode entwickelt zu haben.

Der Erfindung liegt die Erkenntnis zugrunde, dass die Undichtheit eines Ventils, die naturgemäss zu Drücken vor und hinter dem Ventil führt, die vom Solldruck abweichen, schnell erkannt werden kann, wenn man die Druckzustände, die sich vor und hinter dem Ventil in allen Apparateteilen, die mit der Leitung, in der das Ventil sich befindet, in einem bestimmten Schalttakt in Verbindung stehen, mit den zugehörigen Soll-Druckzuständen vergleicht und dann aus einer zunächst grösseren Zahl verdächtiger Ventile durch fortlaufenden Vergleich der Druckzustände in anderen Takten und an anderen Adsorbern, wobei sich ebenfalls verdächtige Ventile ergeben, durch logische Schlussfolgerungen schliesslich dasjenige ermittelt, welches als einziges für eine grössere Anzahl von Druckabweichungen verantwortlich sein kann.

Als sehr geeignete physikalische Grösse, die laufend verfolgt wird, hat sich bei Druckwechsel-Adsorptionsanlagen der Druck in den Adsorbern erwiesen. Auf welche Art der Druck gemessen wird, oder ob ein absoluter Druck oder eine Druckänderung oder ein Druckverlauf hierfür zweckmässig gemessen wird, hängt davon ab, welche Art Druckwechselverfahren durchgeführt wird, welche technischen Hilfs- und Überwachungsmittel zur Verfügung stehen, welche Druckdifferenzen zwischen Adsorption und Desorption herrschen usw.

Es ist z.B. möglich, eine vorbestimmte Druckänderung durch eine automatische Regelung der Ventile innerhalb einer bestimmten Zeit zu bewerkstelligen. Dann kann beispielsweise die Ventilstellung zu einem bestimmten Zeitpunkt während der Druckänderung als physikalische Grösse, die es zu überwachen gilt, gewählt werden.

Man kann Druckwechsel-Adsorptionsanlagen so fahren, dass die einzelnen Schalttakte, d.h. die Ventilumstellungen, nicht nach einem Zeitplan, sondern nach einem Druckplan erfolgen, d.h. die Ventile schalten um, wenn der Druck in bestimmten Teilen der Anlage, beispielsweise in den Adsorbern oder in den Verbindungsleitungen, einen bestimmten, vorher festgelegten Wert erreicht hat. Bei einer vorgegebenen Ventilkennlinie besteht dann die Möglichkeit, die Zeit, die bis zum Umschalten verfliesst, zu messen und Abweichungen von den Sollzeiten als Indizien für defekte Ventile heranzuziehen.

Die am weitesten verbreitete Art, Druckwechsel-Adsorptionsanlagen zu fahren, besteht jedoch darin, die Umschaltungen einem vorher genau festgelegten Zeitplan folgen zu lassen. In diesem Fall hat es sich erfindungsgemäss als besonders zweckmässig erwiesen, die Drücke in den Adsorbern und/oder in den verbindenden Leitungen als physikalische Grössen auszuwählen und zur Ermittlung defekter Ventile heranzuziehen.

Im Prinzip kann ein undichtes Ventil entweder zu einem höheren oder zu einem niedrigeren Druck als dem Soll-Druck führen. Übersteigt der Ist-Druck den Soll-Druck, dann kommen als Ventile all jene in Frage, die zwischen der Messstelle bzw. dem Adsorber, in dem sich die Messstelle befindet und anderen Apparateteilen liegen, die einen höheren Druck haben. Wenn anderseits die Abweichung vom Soll-Wert nach unten erfolgt, dann sind alle diejenigen Ventile verdächtig, die zwischen der Messstelle und den Apparateteilen liegen, die sich auf einem niedrigeren Druck befinden. Durch eine Weiterverfolgung der Drücke in den folgenden Takten in demselben Adsorber und auch in anderen Adsorbern können dann durch einen Vergleich der Ist- und der Soll-Werte jeweils bestimmte, vorher verdächtige Ventile ausgeschlossen werden, so dass zum Schluss ein einziges, nämlich das defekte Ventil ermittelt werden kann.

Zum besseren Verständnis sei die Erfindung zunächst an Hand der in der Fig. 1 dargestellten 9-Adsorberanlage und dem zugehörigen, in Fig. 2 dargestellten Taktschema dieser 9 Adsorber näher erläutert.

Durch Leitung 107 und Ventil 11 gelangt Rohgas in den Adsorber 1. Im Adsorber 1 werden die leichter adsorbierbaren Komponenten festgehalten, während die schwerer adsorbierbaren Komponenten die Anlage über das Ventil 12 und die Leitung 104 verlassen. Nach beendeter Adsorption wird der bisher zum Adsorber 1 geführte Teil des Rohgasstromes auf einen anderen Adsorber (im vorliegenden Fall auf den Adsorber 4) umgeschaltet und im Adsorber 1 der Druck auf einen ersten Zwischendruck gesenkt (E1). Dies geschieht durch Druckausgleich mit dem Adsorber 5 durch Öffnung der Ventile 15 und 55. Anschliessend wird der Druck im Adsorber 1 auf einen zweiten Zwischendruck gesenkt (E2), und zwar durch Druckausgleich mit dem Adsorber 6 über die Ventile 16 und 66, und auf einen dritten Zwischendruck (E3) durch Druckausgleich mit dem Adsorber 7 über die Ventile 16 und 76.

Während dieser Drucksenkungen im Adsorber 1, die in Adsorptionsrichtung erfolgen, wird der Druck in den Adsorbern 5, 6 und 7 erhöht (B1, B2 bzw. B3).

Danach wird der Druck im Adsorber 1 durch Öffnung der Ventile 13, 83 und 84 weiter gesenkt (E4). Das Gas aus dem Adsorber 1 strömt jetzt durch den Adsorber 8, der dabei von zuvor adsorbierten Komponenten vollständig freigespült wird (S2). Das sich ausbildende Gasgemisch gelangt über Leitung 105 in den Ausgleichsbehälter 101.

Anschliessend werden die Ventile 83 und 84 geschlossen und die Ventile 93 und 94 geöffnet (E5), wodurch der Adsorber 9 von einem Teil der zuvor adsorbierten Komponenten freigespült wird (S1). Beide Spülschritte erfolgen im Gegenstrom zur Adsorption.

Im Anschluss daran werden die Ventile 13, 93 und 94 geschlossen und das restliche, im Adsorber 1 befindliche Gas durch Öffnung des Ventils 14 als Restgas in den Behälter 101 abgelassen (E6). Danach hat der Adsorber 1 keinen Überdruck mehr und steht zum Spülen bereit.

Das Spülen (S1) wird durch eine Verbindung des Adsorbers 1 mit dem noch unter Druck stehenden Adsorber 2 über die geöffneten Ventile 23, 13 und 14 bewerkstelligt. Das Gas gelangt über Leitung 105 in den Behälter 101. Der Adsorber 2 durchläuft dabei seinen fünften Entspannungstakt (E5). Für den zweiten Spültakt (S2) des Adsorbers 1 wird das Ventil 23 geschlossen und das Ventil 33 geöffnet, so dass der Adsorber jetzt Spülgas aus dem Adsorber 3 erhält, der seinen vierten Entspannungstakt (E4) durchläuft. Das Gas gelangt wieder in den Behälter 101.

Die sich an die Spülung anschliessende Erhöhung des Druckes im Adsorber 1 wird in vier Schritten vorgenommen. Zu diesem Zweck wird der Adsorber 1 durch Schliessung des Ventils 14 und Öffnung der Ventile 46 und 16 mit dem Adsorber 4 in Druckausgleich gebracht (B3), wobei der letztere seinen dritten Entspannungstakt (E3) durchläuft. Die weitere Drucksteigerung im Adsorber 1 (B2) erfolgt durch Schliessung des Ventils 46 und Öffnung des Ventils 56, wobei der Adsorber 5 entspannt wird (E2). Die dritte Drucksteigerung (B1) erfolgt durch Schliessung des Ventils 56 und Öffnung der Ventile 65 und 15 und damit Verbindung mit dem Adsorber 6, der dabei ebenfalls eine Entspannung erfährt (E1). Die letzte Drucksteigerung (B) auf den Adsorptionsdruck wird mit abgezweigtem Produktgas vorgenommen, indem die Ventile 102 und 15 geöffnet werden. Der Adsorber 1 steht jetzt wieder für eine erneute Adsorption zur Verfügung.

Im Schema der Fig. 2 sind untereinander die Adsorber in der Numerierung der Fig. 1 aufgetragen, in der obersten Zeile die Taktnummern T und bei jedem Takt die Taktkennzahlen j der Tabelle 1 mit den zugehörigen Taktbezeichnungen, die sich ebenfalls aus Tabelle 1 ergeben.

Bei den Fig. 3 und 5 bis 7 finden sich die gleichen Angaben in der gleichen Anordnung.

Aus dem Schema der Fig. 2 ist ersichtlich, dass bei der in Fig. 1 dargestellten Anlage stets drei Adsorber gleichzeitig, jedoch zeitlich etwas gegeneinander verschoben, auf Adsorption geschaltet sind. Bei jedem Adsorptionstakt gelangt also in jeden Adsorber nur ⅓ der Rohgasmenge.

Das Taktschema, das bei der in Fig. 1 gezeigten Anlage ein jeder Adsorber zu durchlaufen hat, wurde lediglich am Beispiel des Adsorbers 1 geschildert. Es liegt für den Fachmann auf der Hand, dass die Taktschemata der übrigen Adsorber 2 bis 9, wie auch im übrigen zweifelsfrei aus dem Schema der Fig. 2 hervorgeht, dem Taktschema des Adsorbers 1 in allen Punkten entsprechen und lediglich zeitlich gegen dieses verschoben sind, so dass die Anlage insgesamt einen kontinuierlich fliessenden Produktgasstrom liefert.

Am Beispiel dieser 9-Adsorberanlage mit 6 Druckstufen sei nunmehr die Ermittlung eines Ventilfehlers nach der Erfindung dargestellt.

Der Zustand jedes Adsorbers ist durch seine Taktkennzahl j charakterisiert. Diese Taktkennzahl errechnet sich nach

$$j = T - 2\,(i - 1) \tag{1}$$

wobei
T = Taktnummer
i = Nummer des Adsorbers in der Reihenfolge der Adsorber.

Die maximale Taktnummer errechnet sich wie folgt:

$$T_{MAX} = 2n_A + 2m = 2n \tag{2}$$

wobei
n = Anzahl der Adsorber
$n_A$ = Anzahl der gleichzeitig in Adsorption befindlichen Adsorber
m = Zahl der Druckstufen.

Erfindungsgemäss wird jeder Taktkennzahl eine Druckkennzahl $p_j$ zugeordnet, die im allgemeinen ein bestimmtes Druckniveau wiedergibt. Für eine Anlage mit 9 Adsorbern gemäss den Fig. 1 und 2 ergibt sich beispielsweise folgendes Schema für die Takt- bzw. Druckkennzahlen:

## Tabelle 1

| Takt-kenn-zahl | Druck-kenn-zahl | Taktbe-zeich-nung | Taktbeschreibung |
|---|---|---|---|
| j = 1 | $p_j = 6$ | A | 1. Adsorptionstakt |
| j = 2 | $p_j = 6$ | A | 2. Adsorptionstakt |
| j = 3 | $p_j = 6$ | A | 3. Adsorptionstakt |
| j = 4 | $p_j = 6$ | A | 4. Adsorptionstakt |
| j = 5 | $p_j = 6$ | A | 5. Adsorptionstakt |
| j = 6 | $p_j = 6$ | A | 6. Adsorptionstakt |
| j = 7 | $p_j = 5$ | E1 | 1. Entspannungstakt |
| j = 8 | $p_j = 4$ | E2 | 2. Entspannungstakt |
| j = 9 | $p_j = 3$ | E3 | 3. Entspannungstakt |
| j = 10 | $p_j = 2$ | E4 | 4. Entspannungstakt |
| j = 11 | $p_j = 1$ | E5 | 5. Entspannungstakt |
| j = 12 | $p_j = 0$ | E6 | 6. Entspannungstakt |
| j = 13 | $p_j = 0$ | S1 | 1. Spültakt |
| j = 14 | $p_j = 0$ | S2 | 2. Spültakt |
| j = 15 | $p_j = 2$ | B3 | 1. Druckaufbautakt |
| j = 16 | $p_j = 3$ | B2 | 2. Druckaufbautakt |
| j = 17 | $p_j = 4$ | B1 | 3. Druckaufbautakt |
| j = 18 | $p_j = 5$ | B | 4. Druckaufbautakt |

Wie aus Fig. 1 ersichtlich, sind für jeden Adsorber insgesamt sechs Ventile erforderlich, nämlich drei Ventile für die Druckausgleiche und je ein Ventil für den Rohgaseintritt, den Produktgasaustritt und die Restgas-Entspannung.

Die Ventile sind entsprechend der folgenden Übersicht (Tabelle 2) bei folgenden Takten geöffnet:

## Tabelle 2

| Ventile | Funktion | Öffnung bei j = |
|---|---|---|
| Vi1, Vi2 | Rohgaseintritt bzw Produktgasaustritt | 1 bis 6 |
| Vi3 | Entspannung bzw. Spülung | 10, 11, 13 und 14 |
| Vi4 | Entspannung ins Restgas und Spülung | 12, 13 und 14 |
| Vi5 | erste Entspannung bzw. dritter Druckausgleich und Bespannung mit Produkt | 7, 17 und 18 |
| Vi6 | zweite und dritte Entspannung bzw. erster und zweiter Druckausgleich | 8, 9, 15 und 16 |

(i = Nummer des Adsorbers)

Wie bereits aus Tabelle 1 ersichtlich, ergeben sich für den Adsorber 1 der in Fig. 1 dargestellten Anlage für die Takte 1 bis 18 die in Tabelle 3 noch einmal zusammengefassten Druck-Kennzahlen $p_j$:

## Tabelle 3

| T | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| $p_j$ | 6 | 6 | 6 | 6 | 6 | 6 | 5 | 4 | 3 | 2 | 1 | 0 | 0 | 0 | 2 | 3 | 4 | 5 |

Entsprechend der Funktionsweise der Ventile können auch dem jeweiligen Ventil-Nachdruck Druckkennzahlen $p_v$ zugeordnet werden. Sie sind in Tabelle 4 wiedergegeben.

## Tabelle 4

| T | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| Vi1, 2 | 6 | 6 | 6 | 6 | 6 | 6 | 6 | 6 | 6 | 6 | 6 | 6 | 6 | 6 | 6 | 6 | 6 | 6 |
| Vi3 | 1 | 2 | 1 | 2 | 1 | 2 | 1 | 2 | 1 | 2 | 1 | 2 | 1 | 2 | 1 | 2 | 1 | 2 |
| Vi4 | 0 | 0 | 0 | 0 | 0 | 0 | 0 | 0 | 0 | 0 | 0 | 0 | 0 | 0 | 0 | 0 | 0 | 0 |
| Vi5 | 5 | 5 | 5 | 5 | 5 | 5 | 5 | 5 | 5 | 5 | 5 | 5 | 5 | 5 | 5 | 5 | 5 | 5 |
| Vi6 | 3 | 4 | 3 | 4 | 3 | 4 | 3 | 4 | 3 | 4 | 3 | 4 | 3 | 4 | 3 | 4 | 3 | 4 |

Diese erfindungsgemässe Zuordnung von Druckkennzahlen für den Ventil-Nachdruck ermöglicht es, die Fehlfunktionen von Ventilen, wenn sie auf einer Undichtheit des Ventils beruhen, zu ermitteln. Eine Ventilundichtheit bewirkt nämlich eine Druckdifferenz zwischen dem Ventil-Nachdruck (Druckkennzahl $p_v$) und dem Ventil-Vordruck (Adsorberdruck = Druckkennzahl $p_j$), die direkt messbar ist, und zwar durch Druckmessung an dem jeweiligen Adsorber und durch die Feststellung einer Druckabweichung gegenüber dem Druck-Sollwert am Ende eines jeden Taktes. Allerdings sind diese Abweichungen nur bei denjenigen Takten feststellbar, wo ein Druckausgleich zwischen zwei geschlossenen Volumina erfolgt (z.B. bei j = 7, 8, 9, 15, 16 und 17).

Definitionsgemäss beträgt die Druckdifferenz $\Delta_p$ an einem Ventil

$$\Delta_p = p_v - p_j. \qquad (3)$$

Wenn eine Fehlfunktion vorliegt, ist $\Delta_p \neq 0$. Dementsprechend gibt es die Möglichkeit einer positiven Abweichung ($\Delta_p$ grösser 0), wenn Gas durch eine Ventilundichtheit in einen Adsorber einströmt, und einer negativen Abweichung ($\Delta_p$

kleiner 0), wenn Gas durch eine Ventilundichtheit aus dem Adsorber ausströmt.

Wie bereits weiter oben ausgeführt, können, wenn bei einem Adsorber eine von Null verschiedene Druckdifferenz gemessen wurde, mehrere Ventile dafür verantwortlich sein. Zur Ermittlung des tatsächlich defekten Ventils ist es notwendig, für jeden Takt die Stelle desjenigen Adsorbers zu berechnen, der mit einem bestimmten Adsorber in Druckausgleich steht.

Die jeweiligen Positionen des «abgebenden Adsorbers» und des «annehmenden Adsorbers» lassen sich entweder mit Hilfe eines die Fig. 2 wiedergebenden Gleichungssystems berechnen oder aus der Position innerhalb der Fig. 2 entnehmen.

Das erfindungsgemässe Verfahren der Ermittlung von Fehlfunktionen von Ventilen sei im nachfolgenden an einem Beispiel beschrieben.

Beispiel 1

Bei einer Anlage mit neun Adsorbern gemäss Fig. 1 und einem Zeitablaufschema gemäss Fig. 2 mit sechs Druckstufen (m = 6) sei angenommen, dass beim Adsorber 1 im Takt 7 bzw. gegen Ende des Taktes 7 ein gegenüber dem Soll-Druck zu niedriger Druck gemessen wird. Im Sinne der obigen Definition handelt es sich also um eine negative Abweichung.

Zur Identifizierung des diese negative Abweichung verursachenden defekten Ventils werden folgende Überlegungen bzw. Berechnungen durchgeführt:

Aus Tabelle 3 geht hervor, dass für den Adsorber 1 bei j = 7 die Druckkennzahl $p_j$ 5 beträgt. Als defekte Ventile kommen dann alle Ventile des Adsorbers 1 in Frage, die in diesem Takt eine Druckkennzahl $p_v$ kleiner als 5 haben. Nach Tabelle 4 sind das für den Takt 7 die Ventile Vi3, Vi4 und Vi6.

Verdächtig sind mithin die Ventile 13, 14 und 16.

Das gleiche gilt auch für die Ventile desjenigen Adsorbers, mit dem der Adsorber 1 im Takt 7 in Druckausgleich steht. Nach Gleichung 5 ist das im betrachteten Beispiel der Adsorber 5.

Der Takt $j_E$, in dem sich der Adsorber 5 beim Druckausgleich mit dem Adsorber 1 befindet, kann entweder aus Fig. 2 abgelesen oder berechnet werden. Er ergibt sich zu $j_E = 17$.

Nach Tabelle 4 haben im Takt 17 die Ventile Vi3, Vi4 und Vi6 eine Druckkennzahl unter 5. Beim Adsorber 5 sind daher die Ventile 53, 54 und 56 als verdächtig anzusehen.

Darüber hinaus sind in den Kreis der verdächtigen Ventile noch diejenigen einzubeziehen, die einerseits mit der benutzten Entspannungsleitung verbunden sind (im Beispiel hier die Ventile Vi5) und andererseits die, die zu Adsorbern gehören, die während des Taktes 7 des Adsorbers 1 eine niedrigere Druckkennzahl als 5 haben. In welchem Takt sich die einzelnen Adsorber befinden, kann berechnet oder aus Fig. 2 abgelesen werden.

Für den Adsorber 2 ergibt sich z.B. für T = 7 und i = 2 eine Taktkennzahl j = 5. Die Druckkennzahl ist dann für diesen Adsorber nach Tabelle 1 $p_j$ = 6, d.h. die Ventile dieses Adsorbers sind nicht defekt.

Führt man diese Berechnung für alle anderen Adsorber durch, so ergeben sich als weitere verdächtige Ventile die Ventile 65, 75, 85 und 95, so dass damit insgesamt folgende Ventile verdächtig sind: 13, 14, 16, 53, 54, 56, 65, 75, 85 und 95.

Durch Verfolgen des weiteren Druckverlaufs im Adsorber 1 kann der Kreis der verdächtigen Ventile nunmehr eingeengt werden. Dabei wird bei einer vorangegangenen negativen Abweichung auf das erstmalige Auftreten einer positiven Abweichung geachtet.

Wird z.B. im Takt 17 beim Adsorber 1 ein zu hoher Druck festgestellt (positive Abweichung), so kann analog zum vorbeschriebenen Vorgehen eine Liste verdächtiger Ventile aufgestellt werden.

Die Druckkennzahl des Adsorbers 1 ist beim Takt 17 nach Tabelle 3 $p_j$ = 4. Da es sich bei der angenommenen Abweichung um eine positive Abweichung handelt, kommen jetzt als verdächtig alle Ventile in Frage, die eine Druckkennzahl $p_v$ grösser als 4 haben. Nach Tabelle 4 sind das die Ventile Vi1, Vi2 und Vi5. Das Ventil Vi5 entfällt, da es während dieses Taktes geöffnet ist. Es bleiben mithin als verdächtige Ventile die Ventile 11 und 12.

Während dieses Taktes steht der Adsorber 1 im Druckausgleich mit dem Adsorber 6. Mithin sind die Ventile 61 und 62 verdächtig.

Mit der dabei benutzten Entspannungsleitung stehen ausserdem die Ventile Vi5 der Adsorber 7, 8 und 9 in Verbindung. Infolgedessen ergeben sich als verdächtig die Ventile 75, 85 und 95.

Der Kreis der durch die negative Abweichung im Takt 7 festgestellten Ventile kann jetzt auf die Ventile 75, 85 und 95 eingeschränkt werden, da nur diese Ventile sowohl an der negativen als auch an der positiven Druckabweichung schuld sein können.

Um aus diesen drei verdächtigen Ventilen das defekte zu identifizieren, wird der Druck in den anderen Adsorbern auf Abweichungen hin verfolgt. Eine angenommene positive Abweichung des Druckes des Adsorbers 9 im Takt 8 weist dann eindeutig darauf hin, dass das Ventil 95 defekt ist.

Diese erfindungsgemässe Ermittlungsmethode sei noch einmal kurz zusammengefasst:

Erste negative Abweichung bei Adsorber 1 im Takt 7. Verdächtige Ventile: 13, 14, 16, 53, 54, 56, 65, 75, 85 und 95.

Erste positive Abweichung bei Adsorber 1 im Takt 17. Verdächtige Ventile: 11, 12, 61, 62, 75, 85 und 95.

Erste positive Abweichung bei Adsorber 9 im Takt 8. Verdächtige Ventile: 91, 92, 51, 52, 95, 55, 16, 26, 36 und 46.

Als eindeutig identifiziertes defektes Ventil ergibt sich das Ventil 95, denn nur dieses Ventil kann alle drei beobachteten Druckabweichungen verursacht haben.

Die erfindungsgemässe Methode zur Fehlerermittlung lässt sich besonders vorteilhaft dann anwenden, wenn für die Steuerung einer n-Adsorber-Anlage ein Prozessrechner eingesetzt wird.

Man kann dann die zuletzt aufgeführte Tabelle im Speicher des Rechners so abspeichern, dass die Taktzahlen der ersten positiven und der ersten negativen Abweichung jeweils die Adressen einer «verdächtigen Menge» sind. Bei einer Abweichung vom Soll-Wert werden dann automatisch alle Taktzahlen registriert, die verdächtigen Ventile definiert und durch eine logische UND-Abfrage aller Mengen das betreffende Ventil lokalisiert.

Ist nunmehr anhand des im Vorstehenden beschriebenen Rechenverfahrens ein Ventil als undicht identifiziert, dann wird der zugehörige Adsorber durch Schliessung aller ihm zugeordneten Ventile und gegebenenfalls zusätzlicher Handventile abgeblockt. Die Adsorberanlage muss nunmehr mit den verbleibenden Adsorbern weiterbetrieben werden. Wie dies im einzelnen zu bewerkstelligen ist, sei im folgenden im einzelnen erläutert.

Bei einer Adsorberanlage mit n Adsorbern, von denen $n_A$ Adsorber gleichzeitig im Adsorptionstakt sind und wo mit m Druckstufen gearbeitet wird, ergibt sich für den Gesamtzyklus eines Adsorbers eine Taktanzahl von $T = 2n_A + 2m$.

Die Taktanzahl für eine Adsorptionsphase ist $2n_A$.

Vermindert man die Anzahl der Adsorber um x Adsorber, so ergibt sich eine neue Taktanzahl von $T = 2n_A + 2m - 2x$.

Bei Beibehaltung der Zahl der Druckstufen m können maximal $(n_A - 1)$ Adsorber herausgeschaltet werden. Um mit der verminderten Adsorberzahl die gleiche Gasmenge wie zuvor reinigen zu können, muss dann die Adsorptionsphase auf $2(n_A - x)$ Takte reduziert werden.

Die Produktausbeute ist von der Anzahl der Druckstufen m abhängig. Daraus ergibt sich, dass bei der Wegschaltung von x Adsorbern ohne Veränderung der Anzahl der Druckstufen m im wesentlichen die gleiche Produktausbeute erzielt werden kann wie mit der vollen Adsorberzahl. Verkürzt man die Adsorptionszeit wie zuvor beschrieben, dann kann auch nahezu die gleiche Produktgasmenge erzeugt werden.

Beim Abblocken eines Adsorbers sind zur Anpassung der Taktfolge auf die verminderte Adsorberzahl folgende Schritte durchzuführen:

1. Der fehlerhafte Adsorber i wird durch Schliessen aller zu ihm gehörenden Ventile und gegebenenfalls durch zusätzliche Handabsperrventile abgeblockt.

2. Bei Ausfall des Adsorbers i in einem Takt j mit gerader Zahl laufen die Adsorber mit den Nummern bis $i + \frac{j}{2} - 1$, bei Ausfall in einem Takt j mit ungerader Zahl die Adsorber bis $i + \frac{j+1}{2} - 1$ zwei Takte im ursprünglichen Programm weiter.

Alle übrigen Adsorber beharren in dem Zustand, in dem sie sich bei Ausfall des Adsorbers 1 befanden.

Nach diesen zwei Takten sind die verbliebenen Adsorber in ihren Druckstufen der neuen Taktfolge angepasst.

Während dieses Synchronisationsverfahrens werden Druckausgleichs- oder Überströmvorgänge zwischen zwei Adsorbern, soweit möglich, normal durchgeführt. Ist das nicht möglich, da der korrespondierende Adsorber ausgefallen oder in Warteposition ist, wird das Gas über Zusatzventile abgeführt. Für jede Überströmleitung wird deshalb ein Zusatzventil benötigt.

3. Das Volumen des zu reinigenden Rohgases pro Adsorber wird während der zwei Synchronisationstakte auf dem Wert bei Ausfall des einen Adsorbers gelassen und kann dann je nach Beladungszustand der Adsorber sofort oder spätestens nach weiteren zwei Takten um den Faktor

$$\frac{n_A}{n_A - x}$$

erhöht werden, um die im wesentlichen gleiche Produktmenge mit der verminderten Adsorberzahl zu erzeugen.

Um den Produktausfall möglichst klein zu halten, besteht erfindungsgemäss die Möglichkeit, das Volumen des Rohgases schon während der zwei Synchronisationstakte zu erhöhen, wenn die Anlage bei Ausfall eines Adsorbers im Unterlastbetrieb gefahren wurde.

Maximal ist also bei dem erfindungsgemässen Synchronisationsverfahren auf eine verminderte Adsorberanzahl eine Produktverminderung für die Dauer von vier Takten zu erwarten.

Das erfindungsgemässe Synchronisationsverfahren sei nunmehr anhand einiger Beispiele erläutert.

Beispiel 2

Bei einer Druckwechsel-Adsorptionsanlage mit neun Adsorbern, wie sie beispielsweise in Fig. 1 dargestellt ist und die eine Taktfolge gemäss der Fig. 2 haben, sei im Takt 9 des Adsorbers 1 eine Fehlfunktion eines zu Adsorber 1 gehörenden Ventils erkannt.

Der Adsorber 1 muss daher stillgelegt und die Anlage an eine Taktfolge für acht Adsorber angepasst werden. Diese Taktfolge für acht Adsorber ist in Fig. 3 dargestellt. Wie ersichtlich, sind nach der Umschaltung nur noch zwei Adsorber gleichzeitig in Adsorption. Ausserdem ist die Anzahl der Adsorptionstakte von sechs auf vier vermindert.

In der nachfolgenden Tabelle 5 sind die Taktzahlen der einzelnen Adsorber aufgeführt. In der zweiten Spalte ist der Zustand bei Ausfall des Adsorbers 1 wiedergegeben, in der dritten und in der vierten Spalte der Synchronisationsvorgang und in der fünften Spalte das Ende des Synchronisationsvorganges, das gleichzeitig der Anfang des 8-Adsorber-Programms nach Fig. 3 ist.

Tabelle 5

| 9-Adsorberprogramm | | | | 8-Adsorberprogramm |
|---|---|---|---|---|
| Ads. Nr. | Takt Nr. | Takt Nr. | Takt Nr. | Takt Nr. |
| 1 | 9 | – | – | – |
| 2 | 7 | 8 | 9 | 7 |
| 3 | 5 | 6 | 7 | 5 |
| 4 | 3 | 4 | 5 | 3 |

Tabelle 5 (Fortsetzung)

| 9-Adsorberprogramm | | | 8-Adsorberprogramm |
|---|---|---|---|
| Ads. Nr. Takt Nr. | Takt Nr. | Takt Nr. | Takt Nr. |
| 5   1 | 2 | 3 | 1 |
| 6   17 | 17 | 17 | 15 |
| 7   15 | 15 | 15 | 13 |
| 8   13 | 13 | 13 | 11 |
| 9   11 | 11 | 11 | 9 |

Das in den Takten 7 und 8 anfallende Entspannungsgas des Adsorbers 2 wird während der Synchronisation über die Zusatzventile 115 bzw. 116 (siehe Fig. 1) abgeleitet, da sich die korrespondierenden Adsorber 6 und 7 (Adsorber 6 im Takt 17 und Adsorber 7 im Takt 16) in Warteposition befinden.

Beispiel 3

In Fig. 4 ist eine Druckwechsel-Adsorptionsanlage mit sechs Adsorbern 1 bis 6 dargestellt, wobei die Ventile, deren Funktion mit den Ventilen der Fig. 1 übereinstimmt, mit den gleichen Bezugsziffern versehen wurden. Demzufolge sind die Rohgaseintrittsventile mit 11 bis 61 beziffert, die Reingasaustrittsventile mit 12 bis 62, die Restgasaustrittsventile mit 14 bis 64, die Überströmventile mit 13 bis 63 und die Produktgaswiederaufdrückventile mit 15 bis 65. Das Rohgas gelangt in die Anlage durch die Leitung 107, das Produktgas verlässt sie durch Leitung 104. 102 ist ein Abzweigventil für Produkt-Druckauffüllgas und die Leitungen 113 und 115 sind Restgasleitungen, die während des Synchronisationsvorganges benötigt werden.

Die Taktfolge der sechs Adsorber ist in Fig. 5 wiedergegeben.

Bei einer derartigen Anlage sei angenommen, dass ein Adsorber wegen einer Fehlfunktion eines Ventils im Takt 8 stillgelegt werden muss. Die Anlage wird demgemäss an eine Taktfolge für fünf Adsorber, wie sie in Fig. 6 dargestellt ist, angepasst.

Der Synchronisationsvorgang ist ausserdem in der nachfolgenden Tabelle 6 dargestellt.

Tabelle 6

| 6-Adsorberprogramm | | | 8-Adsorberprogramm |
|---|---|---|---|
| Ads. Nr. Takt Nr. | Takt Nr. | Takt Nr. | Takt Nr. |
| 1   8 | – | – | – |
| 2   6 | 7 | 8 | 6 |
| 3   4 | 5 | 6 | 4 |
| 4   2 | 3 | 4 | 2 |
| 5   12 | 12 | 12 | 10 |
| 6   10 | 10 | 10 | 8 |

Das im Takt 7 anfallende Entspannungsgas des Adsorbers 2 wird über das Zusatzventil 115 (siehe Fig. 4) abgeblasen.

Beispiel 4

Bei der in Fig. 4 dargestellten Anlage mit sechs Adsorbern sei angenommen, dass die Adsorber 2. und 3 wegen einer Fehlfunktion des Adsorbers 2 im Takt 9 und des Adsorbers 3 im Takt 7 stillgelegt werden müssen.

Die Anlage wird demzufolge an eine Taktfolge für vier Adsorber angepasst. Diese Taktfolge ist in Fig. 7 dargestellt. Der Synchronisationsvorgang, der sich durch den gleichzeitigen Ausfall von zwei Adsorbern auf die doppelte Taktzahl verlängert, ist in der nachfolgenden Tabelle 7 wie in den vorangegangenen Beispielen dargestellt.

Tabelle 7

| 6-Ads. Programm | | | 5-Ads. Programm | | | 4-Ads. Programm |
|---|---|---|---|---|---|---|
| Ads. Nr. | Takt Nr. | Takt Nr. | Takt Nr. | Takt Nr. | Takt Nr. | Takt Nr. |
| 1 | 11 | 11 | 11 | 9 | 9 | 9 | 7 |
| 2 | 9 | – | – | – | – | – | – |
| 3 | 7 | – | – | – | – | – | – |
| 4 | 5 | 6 | 7 | 5 | 6 | 7 | 5 |
| 5 | 3 | 4 | 5 | 3 | 4 | 5 | 3 |
| 6 | 1 | 2 | 3 | 1 | 2 | 3 | 1 |

**Patentansprüche für den Vertragsstaat CH**

1. Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft, dadurch gekennzeichnet, dass für die Adsorber und/oder die Ventile der Druckwechsel-Adsorptionsanlage messbare physikalische Grössen ausgewählt und laufend messend verfolgt werden, und dass beim Auftreten von Differenzen zwischen Soll- und Ist-Werten dieser Grössen die dadurch als defekt ermittelten Apparateteile abgeblockt werden und die verbleibenden Adsorber teilweise bis zu vorher festgelegten Takten weiterlaufen

Leitungen 113 und 115 sind Restgasleitungen, die während des Synchronisationsvorganges benötigt werden.

Die Taktfolge der sechs Adsorber ist in Fig. 5 wiedergegeben.

Bei einer derartigen Anlage sei angenommen, dass ein Adsorber wegen einer Fehlfunktion eines Ventils im Takt 8 stillgelegt werden muss. Die Anlage wird demgemäss an eine Taktfolge für fünf Adsorber, wie sie in Fig. 6 dargestellt ist, angepasst.

Der Synchronisationsvorgang ist ausserdem in der nachfolgenden Tabelle 6 dargestellt.

### Tabelle 6

| 6-Adsorberprogramm | | | 8-Adsorber-programm |
|---|---|---|---|
| Ads. Nr. Takt Nr. | Takt Nr. | Takt Nr. | Takt Nr. |
| 1        8 | – | – | – |
| 2        6 | 7 | 8 | 6 |
| 3        4 | 5 | 6 | 4 |
| 4        2 | 3 | 4 | 2 |
| 5       12 | 12 | 12 | 10 |
| 6       10 | 10 | 10 | 8 |

Das im Takt 7 anfallende Entspannungsgas des Adsorbers 2 wird über das Zusatzventil 115 (siehe Fig. 4) abgeblasen.

Beispiel 4

Bei der in Fig. 4 dargestellten Anlage mit sechs Adsorbern sei angenommen, dass die Adsorber 2 und 3 wegen einer Fehlfunktion des Adsorbers 2 im Takt 9 und des Adsorbers 3 im Takt 7 stillgelegt werden müssen.

Die Anlage wird demzufolge an eine Taktfolge für vier Adsorber angepasst. Diese Taktfolge ist in Fig. 7 dargestellt. Der Synchronisationsvorgang, der sich durch den gleichzeitigen Ausfall von zwei Adsorbern auf die doppelte Taktzahl verlängert, ist in der nachfolgenden Tabelle 7 wie in den vorangegangenen Beispielen dargestellt.

### Tabelle 7

| 6-Ads. Programm | | | 5-Ads. Programm | | | 4-Ads. Programm |
|---|---|---|---|---|---|---|
| Ads. Nr. | Takt Nr. | Takt Nr. | Takt Nr. | Takt Nr. | Takt Nr. | Takt Nr. |
| 1 | 11 | 11 | 11 | 9 | 9 | 9 | 7 |
| 2 | 9 | – | – | – | – | – | – |
| 3 | 7 | – | – | – | – | – | – |
| 4 | 5 | 6 | 7 | 5 | 6 | 7 | 5 |
| 5 | 3 | 4 | 5 | 3 | 4 | 5 | 3 |
| 6 | 1 | 2 | 3 | 1 | 2 | 3 | 1 |

**Patentansprüche für die Vertragsstaaten:**
**BE, DE, FR, GB, IT, NL**

1. Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft, bei dem für die Adsorber und/oder die Ventile der Druckwechsel-Adsorptionsanlage als messbare physikalische Grösse der Druck in Adsorbern oder Leitungen ausgewählt und laufend messend verfolgt wird und beim Auftreten von Differenzen zwischen Soll- und Ist-Werten der Drücke die dadurch als defekt ermittelten Apparateteile abgeblockt werden, dadurch gekennzeichnet, dass die Drücke während jedes Taktes festgestellt, Abweichungen von den Sollwerten jedoch nur bei ihrem ersten Auftreten registriert werden und die nach dem Abblocken verbleibenden Adsorber teilweise bis zu vorher festgelegten Takten weiterlaufen und teilweise in ihrem Zustand verharren, bis alle verbliebenen Adsorber einer ihrer Anzahl entsprechenden Taktfolge angepasst sind.

2. Verfahren nach Anspruch 1, dadurch gekennzeichnet, dass die erste positive und die erste negative Abweichung von einem bestimmten Soll-Wert mit dem sie verursachenden Ventil in Korrelation gebracht und das Ventil auf diese Weise identifiziert wird.

3. Verfahren nach Anspruch 1, dadurch gekennzeichnet, dass bei Abblockung eines Adsorbers i in einem Takt mit gerader Taktkennzahl j die Adsorber mit den Nummern bis zu

$$i + \frac{j}{2} - 1$$

zwei Takte im ursprünglichen Programm weiterlaufen, wobei
  j = T − 2 (i − 1)
  T = Taktnummer
  i = Nummer des Adsorbers in der Reihenfolge der Adsorber.

4. Verfahren nach Anspruch 1, dadurch gekennzeichnet, dass bei Abblockung eines Adsorbers i

in einem Takt mit ungerader Taktkennzahl j die Adsorber mit den Nummern bis zu

$$i + \frac{j + 1}{2} - 1$$

zwei Takte im ursprünglichen Programm weiterlaufen, wobei

j = T − 2 (i − 1)
T = Taktnummer
i = Nummer des Adsorbers in der Reihenfolge der Adsorber.

5. Verfahren nach den Ansprüchen 3 und 4, dadurch gekennzeichnet, dass die übrigen Adsorber in Wartestellung bleiben.

6. Verfahren nach den Ansprüchen 3 und 4, dadurch gekennzeichnet, dass die für die abgeblockten oder in Wartestellung befindlichen Adsorber im ursprünglichen Programm vorgesehenen Druckausgleichs- oder Überströmgase über Zusatzventile abgeführt werden.

7. Verfahren nach den Ansprüchen 3 bis 6, dadurch gekennzeichnet, dass das Volumen des zu reinigenden Gasstromes während der zwei Takte unverändert bleibt.

8. Verfahren nach den Ansprüchen 3 bis 7, dadurch gekennzeichnet, dass das Volumen des zu reinigenden Gasstromes nach den zwei Takten um den Faktor

$$, \quad \frac{n_A}{n_A - x}$$

vergrössert wird, wobei
$n_A$ = Zahl der gleichzeitig in Adsorption befindlichen Adsorber,
x = Zahl der abgeblockten Adsorber.

**Beschreibung für den Vertragsstaat: CH**

Verfahren zum Betrieb einer zyklisch arbeitenden Druckwechsel-Adsorptionsanlage

Die Erfindung betrifft ein Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft.

Zur Reinigung und Zerlegung von Gasen, beispielsweise zur Reinigung von Erdgas oder zur Zerlegung von Edelgasen, Luft, Stadtgasen, Spaltgasen, wasserstoffreichen Gasgemischen oder gasförmigen Kohlenwasserstoffen werden heutzutage wegen ihrer Wirtschaftlichkeit und wegen ihrer Effektivität häufig Adsorptionsverfahren eingesetzt. Ganz besonders bewährt haben sich in der letzten Zeit Verfahren, die quasi-isotherm ablaufen und als Druckwechsel-Adsorptionsverfahren bekannt sind. Bei ihnen wird die Desorption bzw. Regenerierung des beladenen Adsorbens nicht durch eine Temperaturerhöhung bewerkstelligt, die eine nachfolgende Abkühlung auf die Adsorption erforderlich machen würde, sondern lediglich durch Drucksenkung über dem beladenen Adsorbens, wobei die Desorption in ihren letzten Stadien häufig durch Anwendung eines Spülgases komplettiert wird. Es ist ausserdem Stand der Technik, die bei der Druckentlastung eines beladenen Adsorbers freiwerdenden Gase mehr oder weniger vollständig zur Druckerhöhung in anderen Adsorbern, die sich auf einem niedrigeren Druckniveau befinden, einzusetzen.

So ist beispielsweise aus der DE-OS 2 624 346 bekannt, zur Reinigung bzw. Zerlegung einiger der eingangs genannten Gasgemische Druckwechsel-Adsorptionsanlagen einzusetzen, die mit bis zu neun Adsorbern bestückt sind. Jedem der Adsorber sind bei der bekannten Anlage sechs Ventile zugeordnet. An die bei höherem Druck vorgenommene Adsorption schliessen sich beim bekannten Verfahren mehrere Entspannungsschritte an, durch die zunächst das in den Hohlräumen des Adsorptionsmittels befindliche Gas, später aber auch adsorbierte Komponenten freigesetzt werden. Die ersten Entspannungsschritte werden durch Druckausgleich mit anderen, auf niedrigeren Drücken befindlichen Adsorbern durchgeführt, die auf diese Weise wieder auf einen gewissen Druck gebracht werden. Nur das bei der letzten Entspannungsstufe anfallende Gas wird als Restgas abgezogen, woran sich eine Gegenstromspülung anschliesst, um möglichst alle adsorbierten Komponenten aus dem Adsorbens zu entfernen. In einer Anzahl von Druckaufbauschritten, zum grossen Teil durch Druckausgleich mit anderen, auf höheren Drücken befindlichen Adsorbern, wird der Druck dann im desorbierten Adsorber wieder erhöht, wobei die letzte Druckerhöhung auf Adsorptionsdruck mit Produktgas erfolgt.

Bei derartigen Anlagen beträgt die Dauer der einzelnen Takte innerhalb eines Zyklus, bis der Adsorber wieder in seinen Ausgangszustand zurückgekehrt ist, oft nur einige Minuten. Mitunter liegen die Taktzeiten sogar nur in der Grössenordnung von Sekunden.

Es liegt auf der Hand, dass ein so schneller Wechsel der Drücke und der Gasflüsse hohe Anforderungen an die Belastbarkeit der Adsorber, der Leitungen und der Ventile stellt, insbesondere wenn man berücksichtigt, dass bei derartigen Anlagen mit einer Lebensdauer von zehn Jahren gerechnet wird. Obwohl diesen Tatsachen bei der Auslegung solcher Anlagen Rechnung getragen wird, kommt es doch mitunter zu Schäden, die auf Materialermüdung oder Materialfehler zurückzuführen sind, Schäden, die sowohl die Adsorber als auch die Leitungen oder die Ventile befallen können, die sich in der Regel als Druckverluste in den Adsorbern und im Leitungssystem äussern und die es notwendig machen, die Anlage stillzulegen, sämtliche Apparateteile zu testen, die defekten zu ermitteln, zu reparieren oder gegen neue auszutauschen und die Anlage dann wieder in Betrieb zu setzen. Derartige Stillstandszeiten bringen ausserordentliche wirtschaftliche Nachteile mit sich, insbesondere, wenn die in dem Adsorptionsverfahren gewonnenen Fraktionen in stetiger Menge an andere, ebenfalls kontinuier-

9

Tabelle 5 (Fortsetzung)

| 9-Adsorberprogramm | | | 8-Adsorber-programm |
| Ads. Nr. Takt Nr. | Takt Nr. | Takt Nr. | Takt Nr. |
| --- | --- | --- | --- |
| 5　　1 | 2 | 3 | 1 |
| 6　　17 | 17 | 17 | 15 |
| 7　　15 | 15 | 15 | 13 |
| 8　　13 | 13 | 13 | 11 |
| 9　　11 | 11 | 11 | 9 |

Das in den Takten 7 und 8 anfallende Entspannungsgas des Adsorbers 2 wird während der Synchronisation über die Zusatzventile 115 bzw. 116 (siehe Fig. 1) abgeleitet, da sich die korrespondierenden Adsorber 6 und 7 (Adsorber 6 im Takt 17 und Adsorber 7 im Takt 16) in Warteposition befinden.

Beispiel 3

In Fig. 4 ist eine Druckwechsel-Adsorptionsanlage mit sechs Adsorbern 1 bis 6 dargestellt, wobei die Ventile, deren Funktion mit den Ventilen der Fig. 1 übereinstimmt, mit den gleichen Bezugsziffern versehen wurden. Demzufolge sind die Rohgaseintrittsventile mit 11 bis 61 beziffert, die Reingasaustrittsventile mit 12 bis 62, die Restgasaustrittsventile mit 14 bis 64, die Überströmventile mit 13 bis 63 und die Produktgaswiederaufdrückventile mit 15 bis 65. Das Rohgas gelangt in die Anlage durch die Leitung 107, das Produktgas verlässt sie durch Leitung 104. 102 ist ein Abzweigventil für Produkt-Druckauffüllgas und die Leitungen 113 und 115 sind Restgasleitungen, die während des Synchronisationsvorganges benötigt werden.

Die Taktfolge der sechs Adsorber ist in Fig. 5 wiedergegeben.

Bei einer derartigen Anlage sei angenommen, dass ein Adsorber wegen einer Fehlfunktion eines Ventils im Takt 8 stillgelegt werden muss. Die Anlage wird demgemäss an eine Taktfolge für fünf Adsorber, wie sie in Fig. 6 dargestellt ist, angepasst.

Der Synchronisationsvorgang ist ausserdem in der nachfolgenden Tabelle 6 dargestellt.

Tabelle 6

| 6-Adsorberprogramm | | | 8-Adsorber-programm |
| Ads. Nr. Takt Nr. | Takt Nr. | Takt Nr. | Takt Nr. |
| --- | --- | --- | --- |
| 1　　8 | – | – | – |
| 2　　6 | 7 | 8 | 6 |
| 3　　4 | 5 | 6 | 4 |
| 4　　2 | 3 | 4 | 2 |
| 5　　12 | 12 | 12 | 10 |
| 6　　10 | 10 | 10 | 8 |

Das im Takt 7 anfallende Entspannungsgas des Adsorbers 2 wird über das Zusatzventil 115 (siehe Fig. 4) abgeblasen.

Beispiel 4

Bei der in Fig. 4 dargestellten Anlage mit sechs Adsorbern sei angenommen, dass die Adsorber 2, und 3 wegen einer Fehlfunktion des Adsorbers 2 im Takt 9 und des Adsorbers 3 im Takt 7 stillgelegt werden müssen.

Die Anlage wird demzufolge an eine Taktfolge für vier Adsorber angepasst. Diese Taktfolge ist in Fig. 7 dargestellt. Der Synchronisationsvorgang, der sich durch den gleichzeitigen Ausfall von zwei Adsorbern auf die doppelte Taktzahl verlängert, ist in der nachfolgenden Tabelle 7 wie in den vorangegangenen Beispielen dargestellt.

Tabelle 7

| 6-Ads. Programm | | | 5-Ads. Programm | | | 4-Ads. Programm |
| Ads. Nr. | Takt Nr. | Takt Nr. | Takt Nr. | Takt Nr. | Takt Nr. | Takt Nr. |
| --- | --- | --- | --- | --- | --- | --- |
| 1 | 11 | 11 | 11 | 9 | 9 | 9 | 7 |
| 2 | 9 | – | – | – | – | – | – |
| 3 | 7 | – | – | – | – | – | – |
| 4 | 5 | 6 | 7 | 5 | 6 | 7 | 5 |
| 5 | 3 | 4 | 5 | 3 | 4 | 5 | 3 |
| 6 | 1 | 2 | 3 | 1 | 2 | 3 | 1 |

**Patentansprüche für den Vertragsstaat CH**

1. Verfahren zum Betrieb einer zyklisch arbeitenden Druckwechsel-Adsorptionsanlage zur Reinigung und Zerlegung von Gasen mit mehreren Adsorbern, von denen jeder innerhalb eines Zyklus eine vorher festgelegte Anzahl von Adsorptions-, Entspannungs- bzw. Druckausgleichs-, Spül- und Wiederaufdrücktakten durchläuft, dadurch gekennzeichnet, dass für die Adsorber und/oder die Ventile der Druckwechsel-Adsorptionsanlage messbare physikalische Grössen ausgewählt und laufend messend verfolgt werden, und dass beim Auftreten von Differenzen zwischen Soll- und Ist-Werten dieser Grössen die dadurch als defekt ermittelten Apparateteile abgeblockt werden und die verbleibenden Adsorber teilweise bis zu vorher festgelegten Takten weiterlaufen und teilweise in ihrem Zustand verharren, bis alle verbliebenen Adsorber einer ihrer Anzahl entsprechenden Taktfolge angepasst sind.

2. Verfahren nach Anspruch 1, dadurch gekennzeichnet, dass als physikalische Grösse der Druck in Adsorbern oder Leitungen gewählt wird.

3. Verfahren nach Anspruch 1, dadurch gekennzeichnet, dass als physikalische Grösse die Zeit bis zur Einstellung eines bestimmten Druckes gewählt wird.

4. Verfahren nach Anspruch 1, dadurch gekennzeichnet, dass als physikalische Grösse die Ventilstellung gewählt wird.

5. Verfahren nach Anspruch 4, dadurch gekennzeichnet, dass als physikalische Grösse eine zeitabhängige Ventilstellung gewählt wird.

6. Verfahren nach den Ansprüchen 1 und 2, dadurch gekennzeichnet, dass die Drücke während jedes Taktes festgestellt, Abweichungen von den Soll-Werten jedoch nur bei ihrem ersten Auftreten registriert werden.

7. Verfahren nach Anspruch 6, dadurch gekennzeichnet, dass die erste positive und die erste negative Abweichung von einem bestimmten Soll-Wert mit dem sie verursachenden Ventil in Korrelation gebracht und das Ventil auf diese Weise identifiziert wird.

8. Verfahren nach Anspruch 1, dadurch gekennzeichnet, dass bei Abblockung eines Adsorbers i in einem Takt j mit gerader Zahl die Adsorber mit den Nummern bis zu

$$i + \frac{j}{2} - 1$$

zwei Takte im ursprünglichen Programm weiterlaufen.

9. Verfahren nach Anspruch 1, dadurch gekennzeichnet, dass bei Abblockung eines Adsorbers i in einem Takt j mit ungerader Zahl die Adsorber mit den Nummern bis zu

$$i + \frac{j+1}{2} - 1$$

zwei Takte im ursprünglichen Programm weiterlaufen.

10. Verfahren nach den Ansprüchen 8 und 9, dadurch gekennzeichnet, dass die übrigen Adsorber in Wartestellung bleiben.

11. Verfahren nach den Ansprüchen 8 und 9, dadurch gekennzeichnet, dass die für die abgeblockten oder in Wartestellung befindlichen Adsorber im ursprünglichen Programm vorgesehenen Druckausgleichs- oder Überströmgase über Zusatzventile abgeführt werden.

12. Verfahren nach den Ansprüchen 8 bis 11, dadurch gekennzeichnet, dass das Volumen des zu reinigenden Gasstromes während der zwei Takte unverändert bleibt.

13. Verfahren nach den Ansprüchen 8 bis 12, dadurch gekennzeichnet, dass das Volumen des zu reinigenden Gasstromes nach den zwei Takten um den Faktor

$$\frac{n_A}{n_A - x}$$

vergrössert wird, wobei

$n_A$ = Zahl der gleichzeitig in Adsorption befindlichen Adsorber;
$x$ = Zahl der abgeblockten Adsorber.

**Claims for the contracting states: BE, DE, FR, GB, IT, NL**

1. A process for the operation of a cyclically working pressure change-adsorption installation for the purification and separation of gases, comprising a plurality of adsorbers, each of which in one cycle, passes through a predetermined number of adsorption, expansion or pressure-equalising, flushing and repressurising stages, in which for the adsorbers and/or valves of the pressure change-adsorption system, the pressure in adsorbers or pipelines is selected as a measurable physical quantity and is continuously monitored for measurement, and on the occurrence of differences between theoretical values and actual values of the pressures, the parts of the installation, which are thereby determined as being defective, are blocked off, characterised in that the pressures are determined during each stage, but deviations from the theoretical values are only registered at their first occurrence and the adsorbers which remain after the blocking off, in part advance to previously determined stages and in part remain in their state at the time, until all the remaining adsorbers are adjusted to a stage sequence which corresponds to their number.

2. A process as claimed in Claim 1, characterised in that the first positive and the first negative deviation from a specific theoretical value are correlated with the valve responsible for the deviation and the valve in this way identified.

3. A process as claimed in Claim 1, characterised in that, when an adsorber i is blocked off in a stage having an even stage characteristic number, the adsorbers having the numbers up to

$$i + \frac{j}{2} - 1$$

advance two stages in the original programme, where
$j = T - 2\,(i-1)$
$T$ = stage number
$i$ = number of adsorber in the sequence of adsorbers.

4. A process as claimed in Claim 1, characterised in that, when an adsorber i is blocked off in a stage having an odd stage characteristic number j, the adsorbers having the numbers up to

$$i + \frac{j+1}{2} - 1$$

advance two stages in the original programme, where
$j = T - 2\,(i-1)$
$T$ = stage number
$i$ = number of adsorber in the sequence of adsorbers.

5. A process as claimed in Claims 3 and 4, characterised in that the remaining adsorbers remain in the waiting position.

6. A process as claimed in Claims 3 and 4, characterised in that the pressure-equalising or through-put gases which are provided in the original programme for the adsorbers which are blocked, or are in the waiting position, are discharged through additional valves.

7. A process as claimed in Claims 3 to 6, characterised in that the volume of the stream of gas to be purified remains unchanged during the two stages.

8. A process as claimed in Claims 3 to 7, characterised in that the volume of the stream of gas to be purified is increased after the two stages by the factor

$$\frac{n_A}{n_A - x}$$

where

$n_A$ = number of adsorbers which are simultaneously in the adsorption stage;

$x$ = number of blocked off adsorbers.

**Revendications pour les Etats contractants: BE, DE, FR, GB, IT, NL**

1. Procédé de conduite d'une installation d'adsorption à alternance de pression opérant cycliquement pour l'épuration et la décomposition de gaz avec plusieurs adsorbeurs, qui effectuent chacun, pendant un cycle, un nombre prédéterminé d'étapes d'adsorption, de détente ou d'équilibrage de pression, de balayage et de rétablissement de pression, suivant lequel, pour les adsorbeurs et/ou les valves de l'installation d'adsorption à alternance de pression, on sélectionne et on suit par une mesure continue, comme grandeur physique mesurable, la pression dans les adsorbeurs ou les conduites et, lorsqu'il apparaît des différences entre les valeurs de consigne et réelles des pressions, on met hors circuit les parties d'installation ainsi définies comme défectueuses, caractérisé en ce que les pressions sont établies pendant chaque cycle, les écarts par rapport aux valeurs de consigne sont cependant enregistrés seulement lors de leur première apparition, et les adsorbeurs restant après la mise hors circuit continuent en partie à fonctionner jusqu'à des étapes précédemment déterminées et sont en partie arrêtés dans leur état jusqu'à ce que tous les adsorbeurs restants soient adaptés à une séquence d'étapes correspondant à leur nombre.

2. Procédé selon la revendication 1, caractérisé en ce que le premier écart positif et le premier écart négatif par rapport à une valeur de consigne déterminée sont mis en corrélation avec la valve les provoquant et la valve est identifiée de cette manière.

3. Procédé selon la revendication 1, caractérisé en ce que, dans le cas d'une défaillance d'un adsorbeur i dans une étape ayant un indice caractéristique d'étape j pair, les adsorbeurs ayant les indices jusqu'à:

$$i + \frac{j}{2} - 1$$

continuent à effectuer deux étapes dans le programme initial, auquel cas:

$j = T - 2\,(i - 1)$,

$T$ = indice d'étape,

$i$ = indice de l'adsorbeur dans la série des adsorbeurs.

4. Procédé selon la revendication 1, caractérisé en ce que, lors d'une défaillance d'un adsorbeur i dans une étape ayant un indice caractéristique d'étape j impair, les adsorbeurs ayant les indices jusqu'à:

$$i + \frac{j + 1}{2} - 1$$

continuent à effectuer deux étapes dans le programme initial, auquel cas:

$j = T - 2\,(i - 1)$,

$T$ = indice d'étape,

$i$ = indice de l'adsorbeur dans la série des adsorbeurs.

5. Procédé selon l'une des revendications 3 et 4, caractérisé en ce que les adsorbeurs restants demeurent en position d'attente.

6. Procédé selon l'une des revendications 3 et 4, caractérisé en ce que les gaz d'équilibrage de pression ou de décharge prévus pour les adsorbeurs défaillants ou se trouvant en position d'attente dans le programme initial sont évacués par l'intermédiaire de valves additionnelles.

7. Procédé selon l'une quelconque des revendications 3 à 6, caractérisé en ce que le volume du courant de gaz à épurer reste invariant pendant les deux étapes.

8. Procédé selon l'une quelconque des revendications 3 à 7, caractérisé en ce que le volume du courant de gaz à épurer est augmenté après les deux étapes du facteur:

$$\frac{n_A}{n_A - x}$$

où:

$n_A$ = nombre des adsorbeurs se trouvant simultanément en adsorption,

$x$ = nombre des adsorbeurs défaillants.

**Claims for the Contracting state: CH**

1. A process for the operation of a cyclically working pressure change-adsorption installation for the purification and separation of gases, comprising a plurality of adsorbers, each of which in one cycle, passes through a predetermined number of adsorption, expansion or pressure-equalisation, flushing and repressurising stages, characterised in that for the adsorbers and/or valves of the pressure change adsorption installation, measurable physical quantities are selected and continuously monitored for measurement; and that on the occurrence of differences between the theoretical and actual values of these quantities, the parts of the apparatus thereby determined as being defective, are blocked off, and the remaining adsorbers in part advance to previously determined stages and in part remain in their state at the time, until all the remaining adsorbers are adjusted to a stage sequence which corresponds to their number.

2. A process as claimed in Claim 1, characterised in that the pressure in adsorbers or pipelines is selected as physical quantitiy.

3. A process as claimed in Claim 1, characterised in that the time until the setting of a specific pressure is selected as physical quantity.

4. A process as claimed in Claim 1, characterised in that the valve position is selected as physical quantity.

5. A process as claimed in Claim 4, characterised in that a time-dependent valve position is selected as physical magnitude.

6. A process as claimed in Claims 1 and 2, characterised in that the pressures are determined during each stage, but deviations from the theoretical values are only registered at their first occurrence.

7. A process as claimed in Claim 6, characterised in that the first positive and the first negative deviation from a specific theoretical value are correlated with the valve responsible for the deviations and the valve in this way identified.

8. A process as claimed in Claim 1, characterised in that when an adsorber i is blocked off in a stage j having an even number, the adsorbers having the numbers up to

$$i + \frac{j}{2} - 1$$

advance two stages in the original programme.

9. A process as claimed in Claim 1, characterised in that when an adsorber i is blocked off in a stage j having an odd number, the adsorbers having the numbers up to

$$i + \frac{j+1}{2} - 1$$

advance two stages in the original programme.

10. A process as claimed in Claims 8 and 9, characterised in that the remaining adsorbers remain in the waiting position.

11. A process as claimed in Claims 8 and 9, characterised in that the pressure-equalising or through-put gases, which are provided in the original programme for the adsorbers which are blocked, or are in the waiting position, are discharged through additional valves.

12. A process as claimed in Claims 8 to 11, characterised in that the volume of the stream of gas to be purified remains unchanged during the two stages.

13. A process as claimed in Claims 8 to 12, characterised in that the volume of the stream of gas to be purified is increased after the two stages by the factor

$$\frac{n_A}{n_A - x}$$

where

$n_A$ = number of adsorbers which are simultaneously in the adsorption stage; and
$x$ = number of blocked off adsorbers.

**Revendications pour l'Etat contractant: CH**

1. Procédé de conduite d'une installation d'adsorption à alternance de pression opérant cycliquement pour l'épuration et la décomposition de gaz avec plusieurs adsorbeurs, qui effectuent chacun, pendant un cycle, un nombre prédéterminé d'étapes d'adsorption, de détente ou d'équilibrage de pression, de balayage et de rétablissement de pression, caractérisé en ce que pour les adsorbeurs et/ou les valves de l'installation d'adsorption á alternance de pression, on sélectionne et on suit par une mesure continue, des grandeurs physiques mesurables, et en ce que, lorsqu'il apparaît des différences entre les valeurs de consigne et réelles de ces grandeurs, on met hors circuit les parties d'installation ainsi définies comme défectueuses, et les adsorbeurs restants continuent en partie à fonctionner jusqu'à des étapes déterminées précédemment et sont en partie arrêtés dans leur état jusqu'à ce que tous les adsorbeurs restants soient adaptés à une séquance d'étapes correspondant à leur nombre.

2. Procédé selon la revendication 1, caractérisé en ce que comme grandeur physique on choisit la pression dans des adsorbeurs ou des conduites.

3. Procédé selon la revendication 1, caractérisé en ce que comme grandeur physique on choisit le temps jusqu'à l'établissement d'une pression déterminée.

4. Procédé selon la revendication 1, caractérisé en ce que comme grandeur physique on choisit la position de valve.

5. Procédé selon la revendication 4, caractérisé en ce que comme grandeur physique on choisit une position de valve fonction du temps.

6. Procédé selon l'une des revendications 1 et 2, caractérisé en ce que les pressions sont fixées pendant chaque étape et en ce que des écarts par rapport aux valeurs de consigne sont cependant enregistrés seulement lors de leur première apparition.

7. Procédé selon la revendication 6, caractérisé en ce que le premier écart positif et le premier écart négatif par rapport à une valeur de consigne déterminée sont mis en corrélation avec la valve les provoquant et en ce que la valve est identifiée de cette manière.

8. Procédé selon la revendication 1, caractérisé en ce que, lors de la défaillance d'un adsorbeur i dans une étape j d'indice pair, les adsorbeurs ayant les indices jusqu'à:

$$i \frac{j}{2} - 1$$

continuent à effectuer deux étapes dans le programme initial.

9. Procédé selon la revendication 1, caractérisé en ce que, lors d'une défaillance d'un adsorbeur i dans une étape j d'indice impair, les adsorbeurs ayant les indices jusqu'à:

$$i + \frac{j + 1}{2} - 1$$

continuent à effectuer deux étapes dans le programme initial.

through-put gases which are provided in the original programme for the adsorbers which are blocked, or are in the waiting position, are discharged through additional valves.

7. A process as claimed in Claims 3 to 6, characterised in that the volume of the stream of gas to be purified remains unchanged during the two stages.

8. A process as claimed in Claims 3 to 7, characterised in that the volume of the stream of gas to be purified is increased after the two stages by the factor

$$\frac{n_A}{n_A - x}$$

where

$n_A$ = number of adsorbers which are simultaneously in the adsorption stage;

$x$ = number of blocked off adsorbers.

**Revendications pour les Etats contractants: BE, DE, FR, GB, IT, NL**

1. Procédé de conduite d'une installation d'adsorption à alternance de pression opérant cycliquement pour l'épuration et la décomposition de gaz avec plusieurs adsorbeurs, qui effectuent chacun, pendant un cycle, un nombre prédéterminé d'étapes d'adsorption, de détente ou d'équilibrage de pression, de balayage et de rétablissement de pression, suivant lequel, pour les adsorbeurs et/ou les valves de l'installation d'adsorption à alternance de pression, on sélectionne et on suit par une mesure continue, comme grandeur physique mesurable, la pression dans les adsorbeurs ou les conduites et, lorsqu'il apparaît des différences entre les valeurs de consigne et réelles des pressions, on met hors circuit les parties d'installation ainsi définies comme défectueuses, caractérisé en ce que les pressions sont établies pendant chaque cycle, les écarts par rapport aux valeurs de consigne sont cependant enregistrés seulement lors de leur première apparition, et les adsorbeurs restant après la mise hors circuit continuent en partie à fonctionner jusqu'à des étapes précédemment déterminées et sont en partie arrêtés dans leur état jusqu'à ce que tous les adsorbeurs restants soient adaptés à une séquence d'étapes correspondant à leur nombre.

2. Procédé selon la revendication 1, caractérisé en ce que le premier écart positif et le premier écart négatif par rapport à une valeur de consigne déterminée sont mis en corrélation avec la valve les provoquant et la valve est identifiée de cette manière.

3. Procédé selon la revendication 1, caractérisé en ce que, dans le cas d'une défaillance d'un adsorbeur i dans une étape ayant un indice caractéristique d'étape j pair, les adsorbeurs ayant les indices jusqu'à:

$$i + \frac{j}{2} - 1$$

continuent à effectuer deux étapes dans le programme initial, auquel cas:

$j = T - 2\,(i - 1)$,

$T$ = indice d'étape,

$i$ = indice de l'adsorbeur dans la série des adsorbeurs.

4. Procédé selon la revendication 1, caractérisé en ce que, lors d'une défaillance d'un adsorbeur i dans une étape ayant un indice caractéristique d'étape j impair, les adsorbeurs ayant les indices jusqu'à:

$$i + \frac{j + 1}{2} - 1$$

continuent à effectuer deux étapes dans le programme initial, auquel cas:

$j = T - 2\,(i - 1)$,

$T$ = indice d'étape,

$i$ = indice de l'adsorbeur dans la série des adsorbeurs.

5. Procédé selon l'une des revendications 3 et 4, caractérisé en ce que les adsorbeurs restants demeurent en position d'attente.

6. Procédé selon l'une des revendications 3 et 4, caractérisé en ce que les gaz d'équilibrage de pression ou de décharge prévus pour les adsorbeurs défaillants ou se trouvant en position d'attente dans le programme initial sont évacués par l'intermédiaire de valves additionnelles.

7. Procédé selon l'une quelconque des revendications 3 à 6, caractérisé en ce que le volume du courant de gaz à épurer reste invariant pendant les deux étapes.

8. Procédé selon l'une quelconque des revendications 3 à 7, caractérisé en ce que le volume du courant de gaz à épurer est augmenté après les deux étapes du facteur:

$$\frac{n_A}{n_A - x}$$

où:

$n_A$ = nombre des adsorbeurs se trouvant simultanément en adsorption,

$x$ = nombre des adsorbeurs défaillants.

**Claims for the Contracting state: CH**

1. A process for the operation of a cyclically working pressure change-adsorption installation for the purification and separation of gases, comprising a plurality of adsorbers, each of which in one cycle, passes through a predetermined number of adsorption, expansion or pressure-equalisation, flushing and repressurising stages, characterised in that for the adsorbers and/or valves of the pressure change adsorption installation, measurable physical quantities are selected and continuously monitored for measurement; and that on the occurrence of differences between the theoretical and actual values of these quantities, the parts of the apparatus thereby determined as being defective, are blocked off, and the remaining adsorbers in part advance to previously determined stages and in part remain in their state at the time, until all the remaining adsorbers are adjusted to a stage sequence which corresponds to their number.

2. A process as claimed in Claim 1, characterised in that the pressure in adsorbers or pipelines is selected as physical quantitiy.

3. A process as claimed in Claim 1, characterised in that the time until the setting of a specific pressure is selected as physical quantity.

4. A process as claimed in Claim 1, characterised in that the valve position is selected as physical quantity.

5. A process as claimed in Claim 4, characterised in that a time-dependent valve position is selected as physical magnitude.

6. A process as claimed in Claims 1 and 2, characterised in that the pressures are determined during each stage, but deviations from the theoretical values are only registered at their first occurrence.

7. A process as claimed in Claim 6, characterised in that the first positive and the first negative deviation from a specific theoretical value are correlated with the valve responsible for the deviations and the valve in this way identified.

8. A process as claimed in Claim 1, characterised in that when an adsorber i is blocked off in a stage j having an even number, the adsorbers having the numbers up to

$$i + \frac{j}{2} - 1$$

advance two stages in the original programme.

9. A process as claimed in Claim 1, characterised in that when an adsorber i is blocked off in a stage j having an odd number, the adsorbers having the numbers up to

$$i + \frac{j+1}{2} - 1$$

advance two stages in the original programme.

10. A process as claimed in Claims 8 and 9, characterised in that the remaining adsorbers remain in the waiting position.

11. A process as claimed in Claims 8 and 9, characterised in that the pressure-equalising or through-put gases, which are provided in the original programme for the adsorbers which are blocked, or are in the waiting position, are discharged through additional valves.

12. A process as claimed in Claims 8 to 11, characterised in that the volume of the stream of gas to be purified remains unchanged during the two stages.

13. A process as claimed in Claims 8 to 12, characterised in that the volume of the stream of gas to be purified is increased after the two stages by the factor

$$\frac{n_A}{n_A - x}$$

where

$n_A$ = number of adsorbers which are simultaneously in the adsorption stage; and
x = number of blocked off adsorbers.

## Revendications pour l'Etat contractant: CH

1. Procédé de conduite d'une installation d'adsorption à alternance de pression opérant cycliquement pour l'épuration et la décomposition de gaz avec plusieurs adsorbeurs, qui effectuent chacun, pendant un cycle, un nombre prédéterminé d'étapes d'adsorption, de détente ou d'équilibrage de pression, de balayage et de rétablissement de pression, caractérisé en ce que pour les adsorbeurs et/ou les valves de l'installation d'adsorption á alternance de pression, on sélectionne et on suit par une mesure continue, des grandeurs physiques mesurables, et en ce que, lorsqu'il apparaît des différences entre les valeurs de consigne et réelles de ces grandeurs, on met hors circuit les parties d'installation ainsi définies comme défectueuses, et les adsorbeurs restants continuent en partie à fonctionner jusqu'à des étapes déterminées précédemment et sont en partie arrêtés dans leur état jusqu'à ce que tous les adsorbeurs restants soient adaptés à une séquance d'étapes correspondant à leur nombre.

2. Procédé selon la revendication 1, caractérisé en ce que comme grandeur physique on choisit la pression dans des adsorbeurs ou des conduites.

3. Procédé selon la revendication 1, caractérisé en ce que comme grandeur physique on choisit le temps jusqu'à l'établissement d'une pression déterminée.

4. Procédé selon la revendication 1, caractérisé en ce que comme grandeur physique on choisit la position de valve.

5. Procédé selon la revendication 4, caractérisé en ce que comme grandeur physique on choisit une position de valve fonction du temps.

6. Procédé selon l'une des revendications 1 et 2, caractérisé en ce que les pressions sont fixées pendant chaque étape et en ce que des écarts par rapport aux valeurs de consigne sont cependant enregistrés seulement lors de leur première apparition.

7. Procédé selon la revendication 6, caractérisé en ce que le premier écart positif et le premier écart négatif par rapport à une valeur de consigne déterminée sont mis en corrélation avec la valve les provoquant et en ce que la valve est identifiée de cette manière.

8. Procédé selon la revendication 1, caractérisé en ce que, lors de la défaillance d'un adsorbeur i dans une étape j d'indice pair, les adsorbeurs ayant les indices jusqu'à:

$$i\frac{j}{2} - 1$$

continuent à effectuer deux étapes dans le programme initial.

9. Procédé selon la revendication 1, caractérisé en ce que, lors d'une défaillance d'un adsorbeur i dans une étape j d'indice impair, les adsorbeurs ayant les indices jusqu'à:

$$i + \frac{j+1}{2} - 1$$

continuent à effectuer deux étapes dans le programme initial.

0 011 872

10. Procédé selon l'une des revendications 8 et 9, caractérisé en ce que les autres adsorbeurs restent en position d'attente.

11. Procédé selon l'une des revendications 8 et 9, caractérisé en ce que les gaz d'équilibrage de pression ou de décharge prévus pour les adsorbeurs défaillants ou se trouvant en position d'attente dans le programme initial sont évacués par l'intermédiaire de valves additionnelles.

12. Procédé selon l'une quelconque des revendications 8 à 11, caractérisé en ce que le volume du courant de gaz à épurer reste invariant pendant les deux étapes.

13. Procédé selon l'une quelconque des revendications 8 à 12, caractérisé en ce que le volume du courant de gaz à épurer est augmenté après les deux étapes du facteur:

$$\frac{n_A}{n_A - x}$$

où:

$n_A$ = nombre des adsorbeurs se trouvant simultanément en adsorption,

$x$ = nombre des adsorbeurs défaillants.

19

Fig. 1

Zeichnungen für die Vertragsstaaten: BE, DE, FR, GB, IT, NL

0 011 872

| Ads. Nr. | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | 1 | 2 | 3 | 4 (A) | 5 | 6 | 7 E1 | 8 E2 | 9 E3 | 10 E4 | 11 E5 | 12 E6 | 13 S1 | 14 S2 | 15 B3 | 16 B2 | 17 B1 | 18 B |
| 2 | 17 B1 | 18 B | 1 | 2 | 3 | 4 (A) | 5 | 6 | 7 E1 | 8 E2 | 9 E3 | 10 E4 | 11 E5 | 12 E6 | 13 S1 | 14 S2 | 15 B3 | 16 B2 |
| 3 | 15 B3 | 16 B2 | 17 B1 | 18 B | 1 | 2 | 3 | 4 (A) | 5 | 6 | 7 E1 | 8 E2 | 9 E3 | 10 E4 | 11 E5 | 12 E6 | 13 S1 | 14 S2 |
| 4 | 13 S1 | 14 S2 | 15 B3 | 16 B2 | 17 B1 | 18 B | 1 | 2 | 3 | 4 (A) | 5 | 6 | 7 E1 | 8 E2 | 9 E3 | 10 E4 | 11 E5 | 12 E6 |
| 5 | 11 E5 | 12 E6 | 13 S1 | 14 S2 | 15 B3 | 16 B2 | 17 B1 | 18 B | 1 | 2 | 3 | 4 (A) | 5 | 6 | 7 E1 | 8 E2 | 9 E3 | 10 E4 |
| 6 | 9 E3 | 10 E4 | 11 E5 | 12 E6 | 13 S1 | 14 S2 | 15 B3 | 16 B2 | 17 B1 | 18 B | 1 | 2 | 3 | 4 (A) | 5 | 6 | 7 E1 | 8 E2 |
| 7 | 7 E1 | 8 E2 | 9 E3 | 10 E4 | 11 E5 | 12 E6 | 13 S1 | 14 S2 | 15 B3 | 16 B2 | 17 B1 | 18 B | 1 | 2 | 3 | 4 (A) | 5 | 6 |
| 8 | 5 | 6 (A) | 7 E1 | 8 E2 | 9 E3 | 10 E4 | 11 E5 | 12 E6 | 13 S1 | 14 S2 | 15 B3 | 16 B2 | 17 B1 | 18 B | 1 | 2 | 3 | 4 (A) |
| 9 | 3 | 4 | 5 | 6 (A) | 7 E1 | 8 E2 | 9 E3 | 10 E4 | 11 E5 | 12 E6 | 13 S1 | 14 S2 | 15 B3 | 16 B2 | 17 B1 | 18 B | 1 | 2 (A) |

Fig. 2

0 011 872

| Ads. Nr. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 1 | 1 | 2 A | 3 | 4 | 5 E1 | 6 E2 | 7 E3 | 8 E4 | 9 E5 | 10 E6 | 11 S1 | 12 S2 | 13 B3 | 14 B2 | 15 B1 | 16 B |
| 2 | 15 B1 | 16 B | 1 | 2 A | 3 | 4 | 5 E1 | 6 E2 | 7 E3 | 8 E4 | 9 E5 | 10 E6 | 11 S1 | 12 S2 | 13 B3 | 14 B2 |
| 3 | 13 B3 | 14 B2 | 15 B1 | 16 B | 1 | 2 A | 3 | 4 | 5 E1 | 6 E2 | 7 E3 | 8 E4 | 9 E5 | 10 E6 | 11 S1 | 12 S2 |
| 4 | 11 S1 | 12 S2 | 13 B3 | 14 B2 | 15 B1 | 16 B | 1 | 2 A | 3 | 4 | 5 E1 | 6 E2 | 7 E3 | 8 E4 | 9 E5 | 10 E6 |
| 5 | 9 E5 | 10 E6 | 11 S1 | 12 S2 | 13 B3 | 14 B2 | 15 B1 | 16 B | 1 | 2 A | 3 | 4 | 5 E1 | 6 E2 | 7 E3 | 8 E4 |
| 6 | 7 E3 | 8 E4 | 9 E5 | 10 E6 | 11 S1 | 12 S2 | 13 B3 | 14 B2 | 15 B1 | 16 B | 1 | 2 A | 3 | 4 | 5 E1 | 6 E2 |
| 7 | 5 E1 | 6 E2 | 7 E3 | 8 E4 | 9 E5 | 10 E6 | 11 S1 | 12 S2 | 13 B3 | 14 B2 | 15 B1 | 16 B | 1 | 2 A | 3 | 4 |
| 8 | 3 A | 4 | 5 E1 | 6 E2 | 7 E3 | 8 E4 | 9 E5 | 10 E6 | 11 S1 | 12 S2 | 13 B3 | 14 B2 | 15 B1 | 16 B | 1 A | 2 |

Fig. 3

0 011 872

Fig. 4

0 011 872

| Ads. Nr. | 1 | 2 | 3 | 4 | 5 | 6 | 7 | 8 | 9 | 10 | 11 | 12 | 1 | 2 | 3 | 4 | 5 | 6 |
|---|---|---|---|---|---|---|---|---|---|---|---|---|---|---|---|---|---|---|
| 1 | 1 | 2 | 3 | 4 | 5 | 6 | 7 E1 | 8 E2 | 9 E3 | 10 S | 11 B1 | 12 B | 1 | 2 | 3 | 4 | 5 | 6 |
|  |  |  | A |  |  |  |  |  |  |  |  |  |  |  | A |  |  |  |
| 2 | 11 B1 | 12 B | 1 | 2 | 3 | 4 | 5 | 6 | 7 E1 | 8 E2 | 9 E3 | 10 S | 11 B1 | 12 B | 1 | 2 | 3 | 4 |
|  |  |  |  |  | A |  |  |  |  |  |  |  |  |  |  | A |  |  |
| 3 | 9 E3 | 10 S | 11 B1 | 12 B | 1 | 2 | 3 | 4 | 5 | 6 | 7 E1 | 8 E2 | 9 E3 | 10 S | 11 B1 | 12 B | 1 | 2 |
|  |  |  |  |  |  |  | A |  |  |  |  |  |  |  |  |  | A |  |
| 4 | 7 E1 | 8 E2 | 9 E3 | 10 S | 11 B1 | 12 B | 1 | 2 | 3 | 4 | 5 | 6 | 7 E1 | 8 E2 | 9 E3 | 10 S | 11 B1 | 12 B |
|  |  |  |  |  |  |  |  |  | A |  |  |  |  |  |  |  |  |  |
| 5 | 5 | 6 | 7 E1 | 8 E2 | 9 E3 | 10 S | 11 B1 | 12 B | 1 | 2 | 3 | 4 | 5 | 6 | 7 E1 | 8 E2 | 9 E3 | 10 S |
|  | A |  |  |  |  |  |  |  |  |  | A |  |  |  |  |  |  |  |
| 6 | 3 | 4 | 5 | 6 | 7 E1 | 8 E2 | 9 E3 | 10 S | 11 B1 | 12 B | 1 | 2 | 3 | 4 | 5 | 6 | 7 E1 | 8 E2 |
|  |  | A |  |  |  |  |  |  |  |  |  |  | A |  |  |  |  |  |

Fig. 5

| Ads. Nr. | 1 | 2 | 3 | 4 | 5 | 6 | 7 | 8 | 9 | 10 | 1 | 2 | 3 | 4 |
|---|---|---|---|---|---|---|---|---|---|---|---|---|---|---|
| 1 | 1 | 2 | 3 | 4 | 5 | 6 | 7 | 8 | 9 | 10 | 1 | 2 | 3 | 4 |
|   | A |   |   |   | E1 | E2 | E3 | S | B1 | B | A |   |   |   |
| 2 | 9 | 10 | 1 | 2 | 3 | 4 | 5 | 6 | 7 | 8 | 9 | 10 | 1 | 2 |
|   | B1 | B | A |   |   |   | E1 | E2 | E3 | S | B1 | B | A |   |
| 3 | 7 | 8 | 9 | 10 | 1 | 2. | 3 | 4 | 5 | 6 | 7 | 8 | 9 | 10 |
|   | E3 | S | B1 | B | A |   |   |   | E1 | E2 | E3 | S | B1 | B |
| 4 | 5 | 6 | 7 | 8 | 9 | 10 | 1 | 2 | 3 | 4 | 5 | 6 | 7 | 8 |
|   | E1 | E2 | E3 | S | B1 | B | A |   |   |   | E1 | E2 | E3 | S |
| 5 | 3 | 4 | 5 | 6 | 7 | 8 | 9 | 10 | 1 | 2 | 3 | 4 | 5 | 6 |
|   | A |   | E1 | E2 | E3 | S | B1 | B | A |   |   |   | E1 | E2 |

*Fig. 6*

0 011 872

| Ads. Nr. | 1 | 2 | 3 | 4 | 5 | 6 | 7 | 8 | 1 | 2 |
|---|---|---|---|---|---|---|---|---|---|---|
| **1** | 1 A | 2 | 3 E1 | 4 E2 | 5 E3 | 6 S | 7 B1 | 8 B | 1 A | 2 |
| **2** | 7 B1 | 8 B | 1 A | 2 | 3 E1 | 4 E2 | 5 E3 | 6 S | 7 B1 | 8 B |
| **3** | 5 E3 | 6 S | 7 B1 | 8 B | 1 A | 2 | 3 E1 | 4 E2 | 5 E3 | 6 S |
| **4** | 3 E1 | 4 E2 | 5 E3 | 6 S | 7 B1 | 8 B | 1 A | 2 | 3 E1 | 4 E2 |

## Fig. 7

Fig. 1

Zeichnungen für den Vertragsstaat: CH

0 011 872

Fig.2

| Ads. Nr. | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | 1 | 2 | 3 | 4 A | 5 | 6 | 7 E1 | 8 E2 | 9 E3 | 10 E4 | 11 E5 | 12 E6 | 13 S1 | 14 S2 | 15 B3 | 16 B2 | 17 B1 | 18 B |
| 2 | 17 B1 | 18 B | 1 | 2 | 3 | 4 A | 5 | 6 | 7 E1 | 8 E2 | 9 E3 | 10 E4 | 11 E5 | 12 E6 | 13 S1 | 14 S2 | 15 B3 | 16 B2 |
| 3 | 15 B3 | 16 B2 | 17 B1 | 18 B | 1 | 2 | 3 | 4 A | 5 | 6 | 7 E1 | 8 E2 | 9 E3 | 10 E4 | 11 E5 | 12 E6 | 13 S1 | 14 S2 |
| 4 | 13 S1 | 14 S2 | 15 B3 | 16 B2 | 17 B1 | 18 B | 1 | 2 | 3 | 4 A | 5 | 6 | 7 E1 | 8 E2 | 9 E3 | 10 E4 | 11 E5 | 12 E6 |
| 5 | 11 E5 | 12 E6 | 13 S1 | 14 S2 | 15 B3 | 16 B2 | 17 B1 | 18 B | 1 | 2 | 3 | 4 A | 5 | 6 | 7 E1 | 8 E2 | 9 E3 | 10 E4 |
| 6 | 9 E3 | 10 E4 | 11 E5 | 12 E6 | 13 S1 | 14 S2 | 15 B3 | 16 B2 | 17 B1 | 18 B | 1 | 2 | 3 | 4 A | 5 | 6 | 7 E1 | 8 E2 |
| 7 | 7 E1 | 8 E2 | 9 E3 | 10 E4 | 11 E5 | 12 E6 | 13 S1 | 14 S2 | 15 B3 | 16 B2 | 17 B1 | 18 B | 1 | 2 | 3 | 4 A | 5 | 6 |
| 8 | 5 A | 6 | 7 E1 | 8 E2 | 9 E3 | 10 E4 | 11 E5 | 12 E6 | 13 S1 | 14 S2 | 15 B3 | 16 B2 | 17 B1 | 18 B | 1 | 2 | 3 | 4 A |
| 9 | 3 | 4 | 5 | 6 A | 7 E1 | 8 E2 | 9 E3 | 10 E4 | 11 E5 | 12 E6 | 13 S1 | 14 S2 | 15 B3 | 16 B2 | 17 B1 | 18 B | 1 | 2 A |

0 011 872

| Ads. Nr. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 1 | 1 A | 2 A | 3 A | 4 A | 5 E1 | 6 E2 | 7 E3 | 8 E4 | 9 E5 | 10 E6 | 11 S1 | 12 S2 | 13 B3 | 14 B2 | 15 B1 | 16 B |
| 2 | 15 B1 | 16 B | 1 A | 2 A | 3 A | 4 A | 5 E1 | 6 E2 | 7 E3 | 8 E4 | 9 E5 | 10 E6 | 11 S1 | 12 S2 | 13 B3 | 14 B2 |
| 3 | 13 B3 | 14 B2 | 15 B1 | 16 B | 1 A | 2 A | 3 A | 4 A | 5 E1 | 6 E2 | 7 E3 | 8 E4 | 9 E5 | 10 E6 | 11 S1 | 12 S2 |
| 4 | 11 S1 | 12 S2 | 13 B3 | 14 B2 | 15 B1 | 16 B | 1 A | 2 A | 3 A | 4 A | 5 E1 | 6 E2 | 7 E3 | 8 E4 | 9 E5 | 10 E6 |
| 5 | 9 E5 | 10 E6 | 11 S1 | 12 S2 | 13 B3 | 14 B2 | 15 B1 | 16 B | 1 A | 2 A | 3 A | 4 A | 5 E1 | 6 E2 | 7 E3 | 8 E4 |
| 6 | 7 E3 | 8 E4 | 9 E5 | 10 E6 | 11 S1 | 12 S2 | 13 B3 | 14 B2 | 15 B1 | 16 B | 1 A | 2 A | 3 A | 4 A | 5 E1 | 6 E2 |
| 7 | 5 E1 | 6 E2 | 7 E3 | 8 E4 | 9 E5 | 10 E6 | 11 S1 | 12 S2 | 13 B3 | 14 B2 | 15 B1 | 16 B | 1 A | 2 A | 3 A | 4 A |
| 8 | 3 A | 4 A | 5 E1 | 6 E2 | 7 E3 | 8 E4 | 9 E5 | 10 E6 | 11 S1 | 12 S2 | 13 B3 | 14 B2 | 15 B1 | 16 B | 1 A | 2 A |

Fig. 3

0 011 872

*Fig. 4*

0 011 872

| Ads. Nr. | 1 | 2 | 3 | 4 | 5 | 6 | 7 | 8 | 9 | 10 | 11 | 12 | 1 | 2 | 3 | 4 | 5 | 6 |
|---|---|---|---|---|---|---|---|---|---|---|---|---|---|---|---|---|---|---|
| 1 | 1 | 2 | 3 | 4 | 5 | 6 | 7 E1 | 8 E2 | 9 E3 | 10 S | 11 B1 | 12 B | 1 | 2 | 3 | 4 | 5 | 6 |
|  |  |  |  | A |  |  |  |  |  |  |  |  |  |  | A |  |  |  |
| 2 | 11 B1 | 12 B | 1 | 2 | 3 | 4 | 5 | 6 | 7 E1 | 8 E2 | 9 E3 | 10 S | 11 B1 | 12 B | 1 | 2 | 3 | 4 |
|  |  |  |  |  | A |  |  |  |  |  |  |  |  |  |  | A |  |  |
| 3 | 9 E3 | 10 S | 11 B1 | 12 B | 1 | 2 | 3 | 4 | 5 | 6 | 7 E1 | 8 E2 | 9 E3 | 10 S | 11 B1 | 12 B | 1 | 2 |
|  |  |  |  |  |  | A |  |  |  |  |  |  |  |  |  |  | A |  |
| 4 | 7 E1 | 8 E2 | 9 E3 | 10 S | 11 B1 | 12 B | 1 | 2 | 3 | 4 | 5 | 6 | 7 E1 | 8 E2 | 9 E3 | 10 S | 11 B1 | 12 B |
|  |  |  |  |  |  |  |  |  | A |  |  |  |  |  |  |  |  |  |
| 5 | 5 | 6 | 7 E1 | 8 E2 | 9 E3 | 10 S | 11 B1 | 12 B | 1 | 2 | 3 | 4 | 5 | 6 | 7 E1 | 8 E2 | 9 E3 | 10 S |
|  |  | A |  |  |  |  |  |  |  |  | A |  |  |  |  |  |  |  |
| 6 | 3 | 4 | 5 | 6 | 7 E1 | 8 E2 | 9 E3 | 10 S | 11 B1 | 12 B | 1 | 2 | 3 | 4 | 5 | 6 | 7 E1 | 8 E2 |
|  |  | A |  |  |  |  |  |  |  |  |  |  | A |  |  |  |  |  |

Fig. 5

0 011 872

0 011 872

| Ads. Nr. | 1 | 2 | 3 | 4 | 5 | 6 | 7 | 8 | 9 | 10 | 1 | 2 | 3 | 4 |
|---|---|---|---|---|---|---|---|---|---|---|---|---|---|---|
| 1 | 1 | 2 | 3 | 4 | 5 | 6 | 7 | 8 | 9 | 10 | 1 | 2 | 3 | 4 |
|   |   | A |   |   | E 1 | E 2 | E 3 | S | B 1 | B |   | A |   |   |
| 2 | 9 B 1 | 10 B | 1 | 2 | 3 | 4 | 5 E 1 | 6 E 2 | 7 E 3 | 8 S | 9 B 1 | 10 B | 1 | 2 |
|   |   |   |   | A |   |   |   |   |   |   |   |   | A |   |
| 3 | 7 E 3 | 8 S | 9 B 1 | 10 B | 1 | 2. | 3 | 4 | 5 E 1 | 6 E 2 | 7 E 3 | 8 S | 9 B 1 | 10 B |
|   |   |   |   |   |   | A |   |   |   |   |   |   |   |   |
| 4 | 5 E 1 | 6 E 2 | 7 E 3 | 8 S | 9 B 1 | 10 B | 1 | 2 | 3 | 4 | 5 E 1 | 6 E 2 | 7 E 3 | 8 S |
|   |   |   |   |   |   |   |   | A |   |   |   |   |   |   |
| 5 | 3 | 4 | 5 E 1 | 6 E 2 | 7 E 3 | 8 S | 9 B 1 | 10 B | 1 | 2 | 3 | 4 | 5 E 1 | 6 E 2 |
|   |   | A |   |   |   |   |   |   |   | A |   |   |   |   |

Fig. 6

| Ads. Nr. | 1 | 2 | 3 | 4 | 5 | 6 | 7 | 8 | 1 | 2 |
|---|---|---|---|---|---|---|---|---|---|---|
| 1 | 1 A | 2 - | 3 E1 | 4 E2 | 5 E3 | 6 S | 7 B1 | 8 B | 1 A | 2 |
| 2 | 7 B1 | 8 B | 1 A | 2 | 3 E1 | 4 E2 | 5 E3 | 6 S | 7 B1 | 8 B |
| 3 | 5 E3 | 6 S | 7 B1 | 8 B | 1 A | 2 | 3 E1 | 4 E2 | 5 E3 | 6 S |
| 4 | 3 E1 | 4 E2 | 5 E3 | 6 S | 7 B1 | 8 B | 1 A | 2 | 3 E1 | 4 E2 |

## Fig. 7